(19) Europäisches Patentamt
European Patent Office
Office européen des brevets

(11) EP 4 223 934 A1

(12) EUROPEAN PATENT APPLICATION
published in accordance with Art. 153(4) EPC

(43) Date of publication:
09.08.2023 Bulletin 2023/32

(51) International Patent Classification (IPC):
*E01H 1/08* (2006.01)

(21) Application number: 21874481.1

(52) Cooperative Patent Classification (CPC):
E01H 1/08

(22) Date of filing: 28.09.2021

(86) International application number:
PCT/CN2021/121354

(87) International publication number:
WO 2022/068825 (07.04.2022 Gazette 2022/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 29.09.2020 CN 202011053850
08.12.2020 CN 202011425445

(71) Applicant: Positec Power Tools (Suzhou) Co., Ltd.
Suzhou, Jiangsu 215123 (CN)

(72) Inventors:
• YU, Xuefeng
Suzhou, Jiangsu 215123 (CN)
• DUAN, Fengwei
Suzhou, Jiangsu 215123 (CN)

(74) Representative: Dentons UK and Middle East LLP
One Fleet Place
London EC4M 7WS (GB)

(54) **LEAF BLOWER**

(57) A garden blower, wherein an air inlet shield is connected to an axial inlet, and comprises a plurality of shield holes for an air flow to pass through. The sum of the ventilation area of the plurality of shield holes defines the total effective ventilation area of the air inlet shield. An extension rod extends in the longitudinal direction, and an operating handle and an air duct portion are separated from each other in the longitudinal direction by means of the extension rod. The linear velocity of a blade edge of an axial fan is greater than 80 m/s, and the total effective ventilation area of the air inlet shield is less than 12000 mm$^2$.

FIG. 3

EP 4 223 934 A1

## Description

This application claims priority to Chinese Patent Application No. 202011053850.X filed on September 29, 2020 and Chinese Patent Application No. 202011425445.6 filed on December 8, 2020, which are incorporated herein by reference in their entireties.

## BACKGROUND

## Technical Field

The present application relates to the field of electric tools, and in particular to a garden blower.

## Related Art

With the continuous expansion of urban green area, green belts in public places such as parks and highways are all over the country, and garden tools are also widely used. The garden blower, which is a common garden tool, removes dust or debris for cleaning by means of airflow blown to the ground.

Generally, the weight of the garden blower is supported by a user. When the user holds the machine for cleaning, the height of the machine from foreign objects on the ground, an included angle between the machine and the ground, and the left-and-right swing purging range of the machine are all determined by a way that the user holds the machine. Therefore, reducing the volume and weight of the garden blower and improving a human-machine effect have been a subject that is tirelessly researched by research and development personnel.

## SUMMARY

Based on this, it is necessary to provide a garden blower with a relatively small overall size and a relatively light overall weight and with performance meeting requirements.

In order to achieve the above purpose, the technical solution provided by the present application is described below:

According to one aspect of the present application, a garden blower is provided, which can gather scattered foreign objects, the garden blower comprising:

an air duct portion, comprising an axial inlet communicating with the outside;

a motor, providing a drive force to the garden blower;

an axial fan, provided in the air duct portion;

an air inlet shield, connected onto the axial inlet, the motor driving the axial fan to rotate about a fan axis and introduce outside air from the axial inlet through the air inlet shield, the air inlet shield being connected with the axial inlet, and comprising a plurality of shield holes for airflow to flow through, and the sum of the ventilation area of the plurality of shield holes defining a total effective ventilation area of the air inlet shield;

an operating handle, used for a user to operate and hold;

a battery pack mounting portion, detachably connected with a battery pack for supplying power to the motor, the battery pack mounting portion being provided close to the operating handle; and

an extension rod, extending in a longitudinal direction, the operating handle and the air duct portion being separated from each other in the longitudinal direction by means of the extension rod, where

a linear velocity of a blade edge of the axial fan being greater than 80 m/s, and the total effective ventilation area of the air inlet shield being less than 12000 mm$^2$.

According to the above garden blower, the rotational speed and volume of the motor, the diameter of the axial fan, the power of the motor and the nominal voltage and capacity of the battery pack are comprehensively considered and configured, and thus, a design with a small size, a small diameter and a light weight can be maximized. At the same time, the size of the axial inlet of the air duct portion and the total effective ventilation area of the air inlet shield affect and restrict an air volume, as well as the size of the motor and the size of the axial fan. By limiting the total effective ventilation area of the air inlet shield, a pattern with a "small" inlet and a "thin" air duct portion is also established. While low power consumption is realized, the endurance time of a DC battery pack can also be satisfied, and the air speed and the air volume are guaranteed, thereby achieving a higher blowing efficiency and a better blowing effect.

In one of embodiments, the air inlet shield is configured to extend longitudinally in the fan axis of the axial fan.

One end of the air inlet shield is connected with the axial inlet, and the other end is supported on the extension rod. The axial fan rotates to form a rotation surface. A projection area of an orthographic projection of the air inlet shield falling, in the longitudinal direction, in a plane where the rotation surface is located is S1.

A projection area of an orthographic projection of the end of the extension rod connected with the air inlet shield falling, in the longitudinal direction, in the plane where the rotation surface is located is S2, wherein

$$6 \leq S1/S2 \leq 16.$$

In one of embodiments, the extension rod is provided with a first end and a second end opposite to each other in the longitudinal direction, the extension rod is connected with the air inlet shield by the first end, and the extension rod is connected with the operating handle by the second end.

The axial fan rotates to form a rotation surface. The orthographic projection of the first end falling, in the longitudinal extension direction of the extension rod, in the plane where the rotation surface is located is always located within an outer contour boundary of the rotation surface. A cross-sectional area of the air inlet shield is less than 13300 mm$^2$.

In one of embodiments, the air inlet shield is provided with a plug-in portion that extends for a preset distance in the extension direction of the extension rod, and the shield holes are distributed circumferentially in the periphery of the plug-in portion.

The garden blower further comprises a first connecting structure. The first end of the extension rod is locked-connected with the plug-in portion of the air inlet shield through the first connecting structure.

In the extension direction of the extension rod, an orthographic projection of the first connecting structure falling in the plane where the rotation surface is located substantially does not coincide with orthographic projections of the shield holes falling in the plane where the rotation surface is located.

In one of embodiments, the plug-in portion is configured as a hollow plug-in pore passage, and the first connecting structure comprises:

a positioning hole, provided in an inner wall of the plug-in pore passage; and

a positioning piece, provided on the extension rod.

The positioning piece has a locking state of being clamped with the inner wall of the positioning hole to restrict the extension rod from coming off backwards from the plug-in portion.

In one of embodiments, in the locking state, an outer contour of the positioning piece exceeds a contour of an inner wall surface of the positioning hole outwards in a radial direction.

In one of embodiments, the positioning piece further has a natural state in which the shape of the positioning piece is kept inserted into the plug-in portion. In the natural state, the positioning piece is in a preset position corresponding to the positioning hole.

Moreover, the positioning piece is configured to change its shape and be in the locking state when subjected to an external acting force.

In one of embodiments, the first connecting structure further comprises a stop portion provided on the plug-in portion. The stop portion can be abutted with the first end of the extension rod to stop the extension rod from moving forward from the plug-in portion.

In one of embodiments, the air duct portion comprises a primary blowing tube and a auxiliary blowing tube communicating with the primary blowing tube. The primary blowing tube is provided with the axial inlet and a primary blow hole opposite to the axial inlet. The auxiliary blowing tube is provided with a auxiliary inlet communicating with the primary blow hole. In a direction perpendicular to the longitudinal direction, the cross-sectional area of the auxiliary inlet is greater than that of the primary blow hole. There is a gap for external airflow to enter the auxiliary blowing tube between the primary blow hole and the auxiliary inlet.

In one of embodiments, the garden blower can be switched between a first operating mode in which air is exhausted at a relatively high air speed and a relatively low air volume and a second operating mode in which air is exhausted at a relatively low air speed and a relatively high air volume, through the auxiliary blowing tube.

The auxiliary blowing tube is movably connected with the primary blowing tube, and the auxiliary blowing tube can be retracted backward or stretch out forward in the longitudinal direction, so that the garden blower can be switched between the first operating mode and the second operating mode.

In one of embodiments, the nominal output voltage of the battery pack is less than or equal to 20 V, the capacity of the battery pack is between 2 Ah and 9 Ah, the maximum rotational speed of the motor is between 18000 rpm and 35000 rpm, the weight of the garden blower without the battery pack connected is not more than 1.5 kg, the maximum air speed of the garden blower in the first operating mode is between 90 mph and 110 mph, and the maximum air volume of the garden blower in the second operating mode is between 350 cfm and 500 cfm; alternatively,
the nominal output voltage of the battery pack is greater than 20 V and less than 56 V, the capacity of the battery pack is between 2 Ah and 9 Ah, the maximum rotational speed of the motor is between 20000 rpm and 38000 rpm, the weight of the garden blower without the battery pack connected is not more than 1.8 kg, the maximum air speed of the garden blower in the first operating mode is between 110 mph and 180 mph, and the maximum air volume of the garden blower in the second operating mode is between 420 cfm and 650 cfm.

In one of embodiments, the length of the air duct portion is not more than 600 mm.

In one of embodiments, the nominal output voltage of the battery pack is less than or equal to 20 V, the capacity of the battery pack is between 2 Ah and 9 Ah, the maximum rotational speed of the motor is between 18000 rpm and 35000 rpm, the diameter of the motor is less than or equal to 40 mm, the maximum effective ventilation area of the cross section of the axial inlet perpendicular to the fan axis is less than 9000 mm$^2$, and the outer diameter of the axial fan is greater than or equal to 50 mm, less than or equal to 67 mm; alternatively
the nominal output voltage of the battery pack is greater than 20 V and less than 56 V, the capacity of the battery pack is between 2 Ah and 9 Ah, the maximum rotational speed of the motor is between 20000 rpm and 38000 rpm, the diameter of the motor is less than or equal to 45 mm, the maximum effective ventilation area of the cross section of the axial inlet perpendicular to the fan axis is less than 13000 mm², and the outer diameter of the axial fan is greater than or equal to 50 mm, less than or equal to 67 mm.

In one of embodiments, an interstice is provided between an outer edge of a blade of the axial fan and an inner wall of the air duct portion.

The dimension of the interstice in the radial direction is less than 1 mm.

In one of embodiments, a linear distance between the highest point of the operating handle and the lowest point of the extension rod is less than 140 mm and greater than 40 mm.

According to another aspect of the present application, a garden blower is provided, which can gather scattered foreign objects, the garden blower comprising:

an air duct portion, comprising an axial inlet communicating with the outside;

a motor, providing a drive force to the garden blower;

an axial fan, provided in the air duct portion, the motor driving the axial fan to rotate about the fan axis and introduce the outside air from the axial inlet;

an air inlet shield, connected onto the axial inlet, the motor driving the axial fan to rotate about the fan axis and introduce outside air from the axial inlet through the air inlet shield;

an operating handle, used for a user to operate and hold; and

an extension rod, extending in a longitudinal direction, the operating handle and the air duct portion being separated from each other in the longitudinal direction by means of the extension rod.

Wherein the maximum height of the air inlet shield is H, and the overall length is L. The ratio of H: L is less than 0.15. The air volume provided by the garden blower is greater than or equal to 350 cfm and less than or equal to 650 cfm. The air speed provided by the garden blower is greater than or equal to 70 mph and less than 185 mph.

In one of embodiments, the maximum width of the air inlet shield is W, where W: L is less than 0.15.

In one of embodiments, the garden blower further comprises a battery pack mounting portion, detachably combined with a battery pack for supplying power to the motor, the battery pack mounting portion being provided close to the operating handle.

There is one battery pack, the nominal output voltage of the battery pack is less than or equal to 20 V, the maximum rotational speed of the motor is between 18000 rpm and 35000 rpm, the ratio range of the maximum height of the air inlet shield to the overall length of the garden blower is between 0.09 and 0.133, the ratio range of the maximum width of the air inlet shield to the overall length of the garden blower is between 0.09 and 0.133, the maximum air speed of the garden blower is between 90 mph and 110 mph, and the maximum air volume of the garden blower is between 350 cfm and 500 cfm; alternatively,

there are two battery packs, the nominal output voltage of the battery pack is greater than 20 V and less than 56 V, the maximum rotational speed of the motor is between 20000 rpm and 38000 rpm, the ratio range of the maximum height of the air inlet shield to the overall length of the garden blower is between 0.11 and 0.16, the ratio range of the maximum height of the air inlet shield to the overall length of the garden blower is between 0.11 and 0.16, the maximum air speed of the garden blower is between 110 mph and 160 mph, and the maximum air volume of the garden blower is between 420 cfm and 650 cfm.

In one of embodiments, the overall length of the garden blower is between 850 mm and 1000 mm.

The maximum height of the air inlet shield is greater than 80 mm and less than 130 mm. The maximum width of the air inlet shield is greater than 80 mm and less than 130 mm.

In one of embodiments, the length of the air duct portion is not more than 600 mm. The overall length of the garden blower is greater than or equal to 850 mm, less than or equal to 1000 mm.

The weight of the garden blower is not more than 1.8 kg.

In one of embodiments, the air duct portion comprises a primary blowing tube and a auxiliary blowing tube communicating with the primary blowing tube. A gap for external airflow to enter the auxiliary blowing tube can be formed between the primary blowing tube and the auxiliary blowing tube. The garden blower can be switched between a first operating mode in which air is exhausted at a relatively high air speed and a relatively low air volume and a second operating mode in which air is exhausted at a relatively low air speed and a relatively high air volume, through the auxiliary blowing tube.

The ratio of the length of the air duct portion in the longitudinal direction to the overall length of the garden blower in the longitudinal direction is less than or equal to 70%. The weight of the garden blower is not more than 1.8 kg. The maximum rotational speed of the motor is configured to be greater than or equal to 18000 rpm and less than 40000 rpm.

## BRIEF DESCRIPTION OF THE DRAWINGS

FIG. 1 is a schematic structural view of a garden blower in the prior art;

FIG. 2 is a schematic structural view of a garden blower in a first operating state in one of embodiments;

FIG. 3 is a schematic structural view of the garden blower shown in FIG. 2 in a second operating state;

FIG. 4 is a schematic cross-sectional view of a garden blower in a first operating state in one of embodiments;

FIG. 5 is a schematic cross-sectional view of the garden blower shown in FIG. 4 in a second operating state;

FIG. 6 is a schematic distribution view of the center of gravity of a first weight unit, the center of gravity of a second weight unit and the center of gravity of a whole machine of the garden blower in one of embodiments;

FIG. 7 is a schematic cross-sectional view of a position of an air inlet shield of a garden blower in a first operating state in one of embodiments;

FIG. 8 is a schematic cross-sectional view of the air inlet shield of the garden blower shown in FIG. 7 in a B-B direction;

FIG. 9 is a schematic view of a fitting relationship between an extension rod and an air inlet shield when its positioning piece is in a locking state in one of embodiments;

FIG. 10 is a schematic structural view of the extension rod when the positioning piece of the extension rod shown in FIG. 9 is in a natural state;

FIG. 11 is a schematic positional view of the center of gravity of a first weight unit, the center of gravity of a second weight unit and the center of gravity of a whole machine of the garden blower in another embodiment of the present application; and

FIG. 12 is a schematic positional view of the center of gravity of a first weight unit, the center of gravity of a second weight unit and the center of gravity of a whole machine of the garden blower in yet another embodiment of the present application.

## DETAILED DESCRIPTION

In order to make the above purposes, features and advantages of the present application more obvious and understandable, the specific implementations of the present application will be described in detail in combination with the attached drawings. Many specific details are described in the following description to fully understand the present application. However, the present application can be implemented in many other ways different from those described herein. Those skilled in the art can make similar improvements without violating the connotation of the present application. Therefore, the present application is not limited by the specific embodiments disclosed below.

In the description of the present application, it should be understood that the orientation or positional relationship indicated by the terms "center", "longitudinal", "transverse", "length", "width", "thickness", "up", "down", "front", "back", "left", "right", "vertical", "horizontal", "top", "bottom", "inside", "outside", "clockwise", "counterclockwise", "axial", "radial", "circumferential" and the like is based on the orientation or positional relationship shown in the attached drawings, which is only for the convenience of describing the present application and simplifying the description, but not for indicating or implying that the device or element referred to must have a specific orientation, be constructed and operated in a specific orientation, which therefore cannot be understood as a restriction on the present application.

Furthermore, the terms "first" and "second" are only used for descriptive purposes and cannot be understood as indicating or implying relative importance or implying the number of technical features indicated. Therefore, the features defined as "first" and "second" may comprise at least one of these features explicitly or implicitly. In the description of the present application, "a plurality of" means at least two, for example, two, three, etc., unless otherwise specified.

In the present application, unless otherwise specified and limited, the terms "mounting", "interconnection", "connection", "fixation" and the like should be understood in a broad sense. For example, the connection may be fixed connection or detachable connection, or integrated connection. The connection may be mechanical connection or electrical connection. The interconnection may be direct interconnection, or indirect interconnection by an intermediate, or may be internal communicating of two components or an interaction relationship between the two components, unless otherwise specified. For those skilled in the art, the specific meaning of the above terms in the present application can be understood on a case-by-case basis.

In the present application, the first feature being "over", "above" and "on" the second feature may be that the first feature is right above or diagonally above the second feature, or only indicates that the horizontal height of the first feature is higher than that of the second feature. The first feature being "under", "below" and "underneath" the second feature may be that the first feature is right below or diagonally below the second feature, or only indicates that the horizontal height of the first feature is less than that of the second feature.

It should be noted that when called "fixed to" or "provided on" another element, an element can be directly on another element or there may be an intermediate element. When considered as "connected with" another element, an element may be directly connected to another element or there may be an intermediate element at the same time. The terms "vertical", "horizontal", "up", "down", "left", "right" and similar expressions used herein are only for illustrative purposes, and are not meant to be the only implementation.

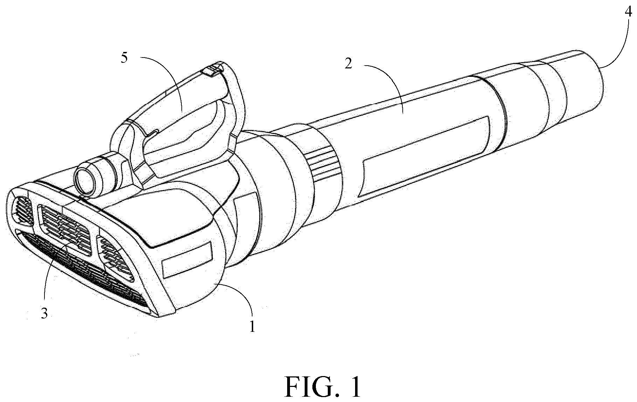

A blower in the related prior art, as shown in FIG. 1, generally comprises a host housing 1, a duct, a fan of producing airflow, a motor for driving the fan and a blowing tube 2 fitted to the host housing. The motor, the duct and the fan are all provided in the host housing 1. The blowing tube 2 is connected with the host housing and forms an airflow passage with the host housing. The blowing tube is provided with an outlet 4. The shell is further provided with an inlet 3. The inlet 3, the motor, the fan, the duct and the outlet 4 are arranged in the longitudinal direction of the blower. The function of the duct is to guide the airflow produced by the fan to move towards the outlet of the blowing tube. The air enters the shell from the inlet 3, and flows from the airflow passage to the outlet 4 to blow out. The host housing 1 is further provided with a handle 5 for an operator to hold. The motor is provided outside the duct and is located below the handle 5.

The main problem of the above garden blower is that it is contradictory to implement miniaturization, light weight and high performance of the machine. Specifically, cleaning conditions encountered by the garden blower mainly comprise: fallen leaves and small garbage on the ground outside a house or in the park, debris between floor brick joints, and wet leaves adhering to the ground. Inventors find by research that in order to meet the cleaning requirements of the above working conditions, generally, the air volume and air speed provided by the garden blower should be high enough. However, the miniaturization and light weight of functional parts will weaken the operating effect of the garden blower, thus reducing the cleaning ability. Miniaturization and light weight of the battery pack will shorten the operating time of the garden blower. For example, only reducing the volume and weight of the host housing 1, the duct and the functional parts will affect and restrict the working effect of the garden blower. The strength of the entire device will be affected and the production cost will be increased by reducing the materials to reduce the weight instead of reducing the volume of the aforementioned components.

Therefore, the contradiction and mutual restriction between the miniaturization, light weight and better operating effect has always been a pain point for a manufacturer.

The inventors of the present application find by further research that in the relevant prior art, the reason for the above problems is that the structures such as the motor, the fan and the air passage structure have not been reasonably configured in parameter or optimized in structure. For example, the prominent problem is that the fan structure and size, the power and rotational speed of the motor and the air passage structure are not considered in combination with the blowing performance and power consumption, resulting in the lower air speed and air volume of the whole machine with a small size and light weight, and the lower efficiency of blowing, which makes it difficult to blow, for example, heavier leaves falling on lawns and leaves in seams. Alternatively, although the efficiency of the whole machine with a larger size and large weight is guaranteed, the noise is high and the power consumption is too high. When the battery pack is used for power supply, the operating time that the blower can maintain is shorter and the man-machine experience is poor.

Therefore, it is necessary to provide a garden blower with a relatively small overall size and a relatively light overall weight and with performance meeting requirements.

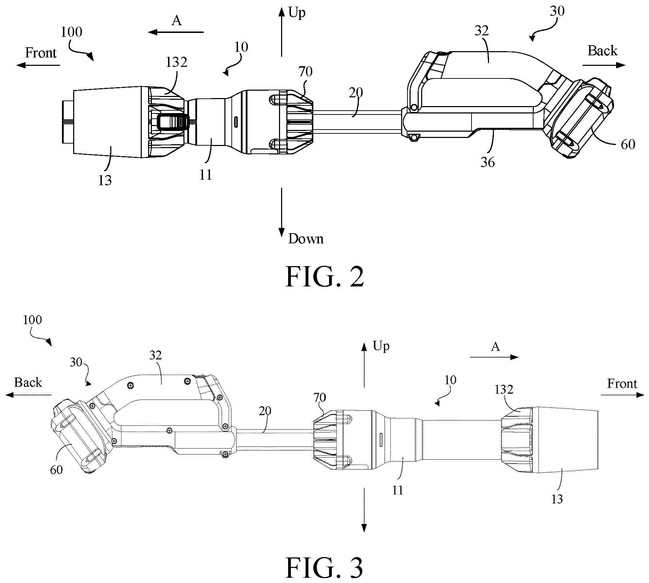

FIG. 2 shows a schematic structural view of a garden blower in a first operating state in one of embodiments. FIG. 3 shows a schematic structural view of the garden blower shown in FIG. 2 in a second operating state. For convenience of illustration, only the parts related to the embodiment of the present application are shown.

The garden blower 100 in the embodiment of the present application is configured to perform a cleaning operation, and can gather scattered foreign objects, which may be leaves or garbage here. For ease of understanding, as shown in FIGS. 2 and 3, a direction in which the airflow outflows corresponding to a blow hole is defined as the front (distal end). For example, a distal end of the garden blower 100 refers to the end away from a user when the user performs a sweeping operation by using the garden blower. Accordingly, the side where the airflow inflows is defined as the rear (proximal end). For example, a proximal end of the garden blower 100 refers to the end of the garden blower 100 close to the user when the user performs a sweeping operation by using the garden blower. The garden blower 100 extends longitudinally between the proximal end (rear) and the distal end (front) in a direction generally indicated by arrow A. An upper part of the drawing is defined as the upper part, and a lower part of the drawing is defined as the lower part. As shown in FIG. 2, the outside of the drawing is defined as the left side, and the inside of the drawing is defined as the right side. As shown in FIG. 3, the drawing inward is defined as the left side, and the drawing outward is defined as the right side. The height of the garden blower refers to the size of the garden blower in a vertical direction, and the width of the garden blower refers to the size of the garden blower in a horizontal direction. It can be understood that the above definition is only for illustration, and cannot be understood as a limitation of the present application.

The garden blower 100 in at least one embodiment disclosed in the present application comprises a housing, a motor 40, a fan and a power supply.

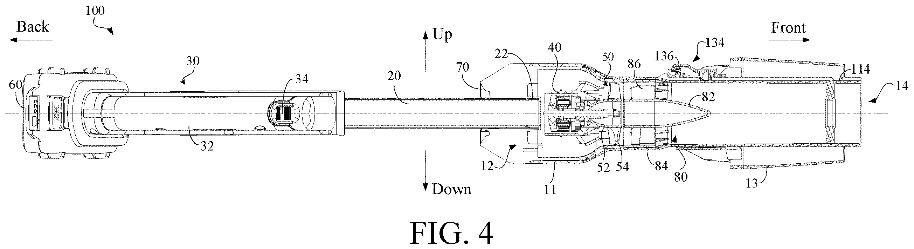

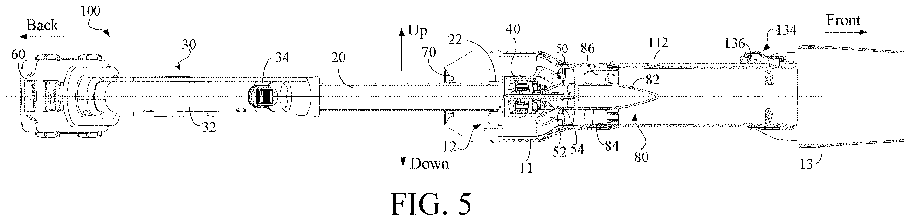

Referring to FIGS. 2 and 3, the housing comprises an air duct portion 10 roughly extending longitudinally, an operating handle 30 for a user to hold, and an extension rod 20 extending longitudinally for a preset distance. The operating handle 30 and the air duct portion 10 are separated from each other in a longitudinal direction by means of the extension rod 20. Specifically, in some embodiments, the air duct portion 10 comprises an axial inlet 12 communicating with the outside (see FIGS. 4 and 5). The extension rod 20 is configured as a tubular structure extending longitudinally between its proximal end and distal end. The extension rod 20 comprises a handle support section connected with the operating handle 30 at the rear side, an air passage support section connected with the air duct portion 10 at the front side, and a middle section connected with the handle support section and the air passage support section. The axial inlet 12 of the air duct portion 10 and the operating handle 30 are separated from each other in the longitudinal direction by means of the middle section of the extension rod 20.

The operating handle 30 is used for the user to operate and hold, and is provided with a holding portion 32 for an operator to hold. The operating handle 30 can be independently provided or integrally formed with the extension rod 20. For example, in some embodiments, the operating handle 30 may be configured to be independently supported on the proximal end of the extension rod 20. In some other embodiments, at least part of the proximal end of the extension rod 20 may form the operating handle 30. Further, the air duct portion 10 extends along the longitudinal length of a first axis (not shown). The holding portion 32 extends along the longitudinal length of a second axis (not shown). The first axis and the second axis define a first plane (a vertical plane in FIGS. 2 and 3). The first plane is perpendicular to the second plane parallel to the second axis (a horizontal plane in FIGS. 2 and 3). A projection of the operating handle 30 on the second plane is spaced and separated from a projection of the air duct portion 10 on the second plane by a certain distance in the longitudinal direction. In some embodiments, the first axis and the second axis are set to form an included angle. Thus, when the holding portion 32 is held for a blowing operation, the second axis of the holding portion 32 is roughly parallel to the horizontal plane, which is very comfortable for operation and avoids fatigue caused by long-time operation. Certainly, in some other embodiments, the first axis may also be parallel to the second axis, which is conducive to reducing the size and volume of the garden blower 100. In addition, the operating handle 30 is further provided with a control switch 34 (see FIGS. 4 and 5). The control switch 34 is electrically connected with the motor 40 to control opening and closing of the motor 40. Admittedly, the control switch 34 may further control the rotational speed of the motor 40.

FIG. 4 shows a schematic cross-sectional view of a garden blower in a first operating state in one of embodiments. FIG. 5 shows a schematic cross-sectional view of the garden blower shown in FIG. 4 in a second operating state.

Referring to FIGS. 4 and 5, the air duct portion 10 is constructed as an internal hollow tubular body. Two opposite ends of the air duct portion 10 are provided with the axial inlet 12 and an axial outlet (not shown in the figure) respectively. It can be understood that hollow means that the air can flow smoothly between the axial inlet 12 and the axial outlet. The air duct portion 10 comprises a primary blowing tube 11 roughly extending longitudinally, and there may be one and only one primary blowing tube 11. Certainly, the primary blowing tube 11 may also be a blowing tube with a complete blowing function formed by combining two or more pipe bodies. The primary blowing tube 11 is located at the distal end of the extension rod 20. As such, the overall length of an air duct portion 23 may be reduced, the flow resistance of the airflow in the air duct portion 10 is reduced, and the whole machine may have a relatively small volume.

The fan is provided in the air duct portion 10, and the motor 40 is connected with the fan, and is configured to drive the fan to rotate about a fan axis, thereby driving the air entering from the side of the axial inlet 12 to form airflow flowing to the side of the axial outlet, to provide a driving force for the garden blower. Specifically, the fan is an axial fan 50. The axial fan 50 may provide a better blowing effect than a centrifugal fan. The axial fan 50 may be made of a fiber composite material structural body, an aluminum metal structural body or a magnesium metal structural body. The fan axis of the axial fan 50 coincides with the center line of the air duct portion 10. Blades of the axial fan 50 rotate to form a rotation surface. The rotation surface is provided to be perpendicular to the fan axis of the axial fan 50 and the center line of the air duct portion 10, which is conducive to the rapid flowing of the airflow. Specifically, in one of embodiments, the air duct portion 10 comprises an upstream region from the axial inlet 12 to the axial fan 50 and a downstream region from the axial fan 50 to the axial outlet. The length of the upstream region is less than that of the downstream region. The motor 40 is provided in the upstream region of the air duct portion 10 and is staggered with the axial inlet 12 in the longitudinal direction. The motor 40 is provided with a motor shaft. The motor shaft is connected with the axial fan 50 and may drive the axial fan 50 to rotate about its fan axis, thus driving the air to move from the upstream region of the air duct portion 10 to the downstream region to form airflow. Certainly, in some other embodiments, the motor shaft may also be connected with the axial fan 50 through a transmission mechanism, which is not limited here. For example, the transmission mechanism may be a planetary gear mechanism.

As a specific embodiment, the axial fan 50 comprises a hub 52 fitted to the motor shaft and a plurality of blades 54 mounted on the hub 52. An interstice is provided between the outer edge of the blade 54 and the inner wall of the air duct portion 10 to avoid interference between the blade and the inner wall of the air duct portion 10 and to form high pressure and high speed airflow. Preferably, the size of the interstice in the radial direction is less than 1 mm. Further, the axial fan 50 further comprises a circumferential connecting belt. The circumferential connecting belt connects all the blades 54 circumferentially. By providing the circumferential connecting belt, not only can the rigidity of the axial fan 50 be increased, the service life of the axial fan 50 be prolonged, and the axial fan 50 protected from damage and the like after a period of use, but also the stability of the axial fan 50 after the axial fan rotates at a high speed can be increased, which is conducive to reducing noise generated by the axial fan 50 after rotating at the high speed.

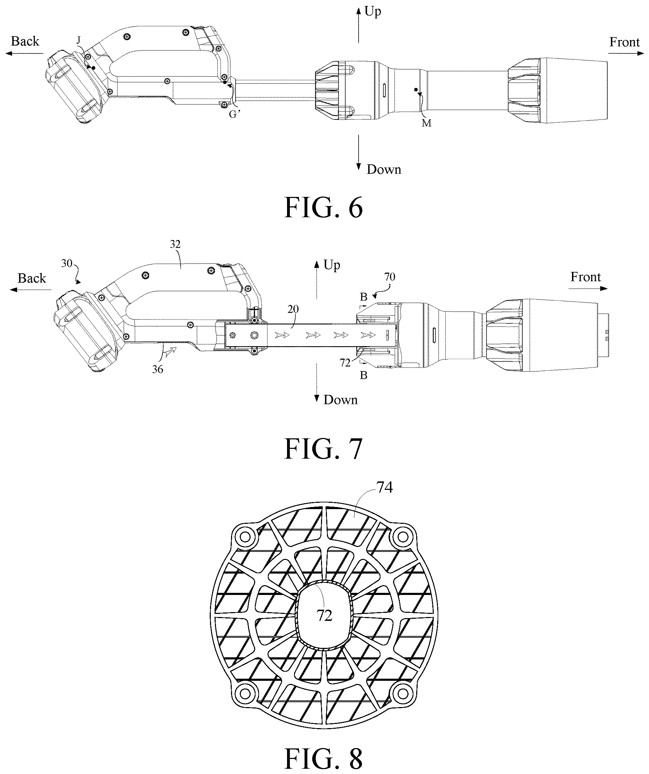

The power supply is configured to provide power for the motor 40. The power supply may be a DC power supply, specifically a rechargeable battery pack 60. The battery pack 60 is detachably mounted on the housing. Specifically, the housing is provided with one or two or more battery pack mounting portions for the battery pack 60 to be combined. The battery pack mounting portion is provided close to the operating handle 30. The number of the battery packs 60 matches that of the battery pack mounting portions. It should be understood that the battery pack mounting portion should be provided close to the operating handle 30, which can implement that the weight units are as close as possible to an operating holding point and relieve the operation fatigue of the user. Specifically, in some embodiments, the battery pack mounting portion is mounted or integrally formed on the proximal end of the extension rod 20 or close to the operating handle 30. When the battery pack 60 is connected with the battery pack mounting portion, the front-most edge of the operating handle 30 is located between the rearmost edge of the battery pack 60 and the axial inlet 12 in the longitudinal direction, and the front-most edge of the operating handle 30 and the rearmost edge of the axial inlet 12 are spaced by a preset distance in the longitudinal direction. In this way, in a state that the battery pack 60 is connected to the battery pack mounting portion, the battery pack 60 at the rear may balance the position of the center of gravity of the garden blower 100 in the longitudinal direction (the center of gravity here is understood as the center of gravity of the whole machine in a state of being fitted with the battery pack 60). Specifically, in the embodiment shown in FIG. 6, the rated voltage of a single battery pack 60 is 20 V, G' is the center of gravity of the whole machine of the garden blower, J is the center of gravity of the first weight unit (the battery pack 60 and the handle 30), and M is the center of gravity of the second weight unit (machine core) of the garden blower. As such, the position of the center of gravity of the garden blower 100 is balanced in the longitudinal direction, so that the center of gravity of the whole machine is as close as possible to the holding portion 32, thereby relieving the fatigue of the user.

More specifically, as shown in FIGS. 2 and 3, the battery pack 60 may be at least partially located below the operating handle 30, or may also be located behind the holding portion 32. A plug-in direction of the battery pack 60 may be set at an angle to the extension direction of the axis of the extension rod 20 and the air duct portion 10. Preferably, the angle may be 30 degrees to 60 degrees. More preferably, the angle may be 45 degrees. Wherein there may be one, two or more battery packs 60, and different types and numbers of battery packs 60 may be selected for the garden blower according to the specific design.

The battery pack 60 in the embodiment of the present application may supply power for at least two different types of DC tools, such as electric tools suitable for the garden blower 100, a grass trimmer, a lawn mower, a chain saw, a hedge trimmer, an angle grinder, an electric hammer, an electric drill and the like. As such, the user may only purchase a bare machine of the garden blower 100, and power is supplied to the garden blower 100 by using the battery packs 60 on other existing electric tools, to realize energy sharing of multiple tools, which is not only conducive to the universality of a platform of the battery pack 60, but also saves the purchase cost for the user. Specifically, in one of embodiments, the battery pack 60 may be fixed onto the battery pack mounting portion by means of buckling or plugging. For example, in some embodiments, the battery pack 60 comprises slide rail portion (not marked) provided on its both sides, a buckling portion and several electrode connecting sheets (not shown) provided on its upper side. The slide rail portion may be fitted with the battery pack mounting portion to realize the battery pack 60 being limited in the radial direction, and the buckling portion is connected with the housing in a buckling manner to realize the battery pack 60 being limited in the axial direction, so that the battery pack 60 is stably connected onto the battery pack mounting portion.

Referring to FIGS. 4 and 5, the garden blower 100 further comprises a guide structure 80 provided in the air duct portion 10. The guide structure 80 is located at a downstream part of the axial fan 50 to guide the airflow to move. Specifically, the guide structure 80 comprises a guide cone 82, a enclosure 84 accommodating the guide cone 82, and stationary blades 86 located between the guide cone 82 and the enclosure 84. The guide cone 82 is roughly provided in the movement direction of the airflow. The guide cone 82 is located in the center of the airflow passage. The guide cone 82 comprises an outer housing and a conical cavity provided in the outer housing. An airflow flowing space is formed between the outer housing of the guide cone 82 and the enclosure 84. The cross section of the flowing space perpendicular to the longitudinal axis is roughly annular. The stationary blades 54 are located in the annular flowing space and are roughly distributed at intervals. A space between every two stationary blades 54 is used for the airflow to flow. Specifically, in one of embodiments, the stationary blade 54 is inclined relative to the movement direction of the airflow, and the inclined angle is preferably 5 to 15 degrees. The stationary blade 54 is at least fixedly connected with one of the guide cone 82 and the enclosure 84 in the radial direction. As a better embodiment, the radial size of the guide cone 82 is smaller than that of the motor 40. Accordingly, the volume of the guide cone 82 is smaller than that of the motor 40, while the enclosure 84 is accommodated in the air duct portion 10, and is fixedly connected with the air duct portion 10.

The garden blower 100 further comprises an air inlet shield 70. The air inlet shield 70 is connected with the axial inlet 12 of the air duct portion 10. The motor 40 can drive the axial fan 50 to rotate about the fan axis to introduce the outside air from the axial inlet 12 through the air inlet shield 70. An airflow passage for the airflow to flow is formed between the air inlet shield 70 and the axial outlet. Wherein in order to facilitate cleaning of the air duct portion 10, the air inlet shield 70 and the axial inlet 12 may be configured to be detachably connected. Specifically, the air inlet shield 70 is configured to extend in the direction of the fan axis of the axial fan 50, and one end of the air inlet shield 70 is connected with the axial inlet 12, and the other end thereof is supported on the extension rod 20. It can be understood that one function of the air inlet shield 70 is to prevent user's fingers from reaching into the air duct portion 10, thereby generating a danger, and its other function is to prevent, for example, leaves or debris from entering the air duct portion 10 during the sweeping operation for fear of causing failure of the motor 40 and the axial fan 50. Specifically, in some embodiments, the air inlet shield 70 comprises a plurality of shield holes 74 (see FIG. 8) for the airflow to flow through. The air enters the axial inlet 12 of the air duct portion via the plurality of shield holes 74. The sum of the ventilation area of the plurality of shield holes 74 defines the total effective ventilation area of the air inlet shield. In other words, the total effective ventilation area of the air inlet shield can be understood as the sum of the cross-sectional area of the air inlet shield 70 in the direction perpendicular to the longitudinal direction that can flow through the airflow. In addition, the air inlet shield 70 is not planar as a whole. For example, in the embodiments shown in FIGS. 4 and 5, an arc-shaped air inlet surface extending in the longitudinal direction is formed on the air inlet shield 70. As a specific implementation, the maximum aperture of the shield hole 74 is not greater than 7 mm. Preferably, the maximum aperture of the shield hole 74 is not greater than 4 mm. As such, not only can a human body be protected, but also the debris can be prevented from entering the axial inlet 12.

It should be emphasized that in the embodiment of the present application, the motor 40, the axial fan 50, and the guide structure 80 are provided in the air duct portion 10, which is separated from the operating handle 30 for holding by a certain distance in the longitudinal direction. As such, in one aspect, on the premise that the length of the garden blower 100 is fixed, the length of the air duct portion 10 becomes shorter. When the motor 40 drives the axial fan 50 to rotate at a high speed, the outside air can be quickly and sufficiently introduced into the air duct portion 10. The air flows rapidly, so that the airflow loss is small, and enough airflow is driven by the motor 40 to rapidly flow, and the air pressure is high. The radial size of the air duct portion 10 is reduced, which optimizes the performance and volume of the garden blower 100, thereby reducing the weight of the garden blower 100. In another aspect, the air duct portion 10 containing the machine core is separated from the operating handle 30 by a distance, which also reduces the height size of the garden blower 100, so that the size and weight of the whole machine are both reduced.

It can be understood that the performance of the garden blower 100 mainly depends on the air volume and air speed of a product, while the air volume and air speed of the product are mainly determined by the blowing effect of the axial fan 50 and the structure of the air passage. The blowing effect of the axial fan 50 is mainly determined by the air volume and air pressure of the axial fan 50. Taking the axial fan 50 as an example, the air volume of the axial fan 50 is expressed by symbol $Q_{air}$, which is mainly expressed by the following formula: $Q_{air} = Q' \times \pi/4 \times D^2 \times V$, where, Q': a flow coefficient, which is related to a form of the axial fan 50 of the blower; D: the outer diameter of the axial fan 50; and V: the circumferential velocity (the linear velocity of the blade edge) of the axial fan 50. Therefore, in the same form of the axial fan 50 (in other words, Q' is definite), and by keeping the air volume of the axial fan 50 constant, the linear velocity V of the blade edge of the axial fan 50 is inversely proportional to the diameter D of the axial fan.

The air pressure of the axial fan 50 is a difference between the total pressure of the airflow at an outlet side of the axial fan 50 and the total pressure of the airflow at the air inlet side, which is called the air pressure, and is represented by symbol H. The air pressure is mainly expressed by the following formula: $H = \rho \times h \times D^2 \times N^2$; $\rho$: density of air; h: a pressure coefficient, which is generally related to the form of the axial fan 50; D: the outer diameter of the axial fan 50; and N: the rotational speed of the axial fan 50. Therefore, in the same form of the axial fan 50, and by keeping the same air pressure, the rotational speed of the axial fan 50 is roughly inversely proportional to the diameter of the axial fan 50.

The inventors of the present application learn after analysis that if the rotational speed of the motor 40 and a fan blade angle are set to be a constant, in the same air passage structure, the larger the diameter of the axial fan 50, the higher the air volume and air speed can be obtained, but at the same time, the consequence is that the power consumption of the blower will be higher. When the battery pack 60 is used as a power supply, the operating duration of the blower will be limited. Therefore, in order to reduce the power consumption of the blower, the diameter of the axial fan 50 tends to be reduced. With the reduction of the diameter of the axial fan 50, the power consumption of the garden blower 100 is gradually reduced, but at the same time, the consequence is that the air volume and air speed of the blower also show a trend of gradual reduction on the whole. Therefore, while considering the power consumption, taking into account the blowing effect of the blower, it is necessary to perform reasonable parameter configuration for the diameter of the axial fan 50, the rotational speed of the motor 40 and the air passage structure. In other words, it is desired that the air speed and the air volume can meet the performance requirements by the reasonable parameter configuration, but the power consumption is within a controllable range, and compared with those of the garden blower 100 in the prior art, the volume and weight are reduced. At the same time, in the same form of the axial fan 50, the same air pressure is kept, and the rotational speed of the axial fan 50 is roughly inversely proportional to the diameter D of the axial fan 50. In other words, to reduce the diameter of the axial fan 50 on the premise of maintaining the desired air volume and air pressure, it is necessary to increase the rotational speed of the axial fan 50. The rotational speed of the axial fan 50 is mainly determined by the motor 40. Therefore, in order to maximize the design with the small volume, small diameter and light weight, the higher the rotational speed of the motor 40, the smaller the diameter of the axial fan 50 in theory. Therefore, the motor 40 with large output power, small volume, small diameter and high rotational speed can realize the light weight of the garden blower 100, and the size of the axial fan 50 driven by the motor 40 may also be significantly reduced, and the weight of the axial fan 50 may also be reduced. The corresponding air duct portion 10 surrounding the axial fan 50 may also be designed to be smaller than the existing garden blower 100 on the market in terms of size and weight. However, the ensuing consequence is that the higher the rotational speed of the motor 40, the greater the maximum output power of the motor 40. The nominal voltage and capacity of the battery pack 60 should also be considered to guarantee the operating duration of the garden blower 100.

Based on the above analysis, it can be seen that the fan blade angle is set to be a constant, and the linear velocity V of the blade edge of the axial fan 50 is positively correlated with the rotational speed V of the axial fan 50 and the diameter D of the axial fan 50. In one of embodiments, the linear velocity of the blade edge of the axial fan is limited to be greater than 80 m/s, and the total effective ventilation area of the air inlet shield is limited to be less than 12000 mm$^2$. Preferably, the linear velocity of the blade edge of the axial fan is greater than 83 m/s, and the effective ventilation area of the air inlet shield is less than 9000 mm$^2$.

As such, the rotational speed and size of the motor 40, the diameter of the axial fan 50, the power of the motor 40 and the nominal voltage and capacity of the battery pack 60 are comprehensively considered and configured, and thus, a design with the small volume, small diameter and light weight can be maximized. At the same time, the size of the axial inlet 12 of the air duct portion 10 and the total effective ventilation area of the air inlet shield 70 affect and restrict an air volume, and also restrict and affect the size of the motor 40 and the size of the axial fan 50. By limiting the total effective ventilation area of the air inlet shield, a pattern with a "small" inlet and a "thin" air duct portion is also established. While low power consumption is realized, the endurance time of the DC battery pack 60 can also satisfied, and the air speed and the air volume are guaranteed, thereby achieving higher blowing efficiency and a better blowing effect.

Specifically, in one of embodiments, the motor 40, the axial fan 50 and the guide structure 80 of the garden blower 100 are all located in the air duct portion 10. The motor 40 is provided in an upstream region between the axial inlet 12 and the axial fan 50 of the air duct portion 10. In order to make the motor 40 have the high rotational speed and small volume, the diameter of the motor 40 is not greater than 45 mm, typically 36 mm to 45 mm, and it is necessary to keep a certain gap between the motor 40 and the inner wall of the air duct portion 10 to provide sufficient air input.

Exemplarily, the motor 40 may be an outer rotor brushless motor 40, which has a relatively small diameter and volume while having a high rotational speed. The maximum rotational speed of the outer rotor brushless motor 40 is configured to be greater than 18000 rpm and less than 40000 rpm. For example, the maximum rotational speed of the motor 40 may be 18000 rpm, 25000 rpm, 27000 rpm, 29000 rpm, 32000 rpm, 35000 rpm and 38000 rpm. The diameter of the motor 40 is not greater than 45 mm. Preferably, the diameter may be configured to be between 36 mm and 45 mm. Therefore, the diameter of the motor 40 may be set as 36 mm, 37 mm, 38 mm, 39 mm, 40 mm, 41 mm, 42 mm, 43 mm or 44 mm.

Further, as a preferred implementation, the ratio of the cross-sectional area of the motor 40 perpendicular to the longitudinal direction to the cross-sectional area of the axial inlet 12 of the air duct portion 10 is less than 0.5. The diameter of the axial inlet 12 of the air duct portion 10 is greater than 50 mm and less than 130 mm. For example, the diameter of the axial inlet 12 of the air duct portion 10 may be 50 mm, 55 mm, 65 mm, 70 mm, 80 mm, 85 mm, 93 mm, 100 mm, 110 mm or 120 mm.

Further, since the motor 40 is located in the upstream region of the air duct portion 10, the motor 40 occupies a certain space and volume, and the air moves along the inside of the air duct portion 10, and the upstream region of the air duct portion 10 comprises several air flow surfaces. The air flow surface is a cross section of the upstream region of the air duct portion 10 perpendicular to the movement direction of the airflow. In order to guarantee the sufficient air input, the area of a smallest air flow surface in the upstream region is larger than that of the rotation surface formed by rotation of the blades 54 of the axial fan 50, which can guarantee that the continuous air supplement contacts the blades 54 of the axial fan 50, thereby guaranteeing uninterrupted blowing. Similar to the barrel theory, the amount of air supplemented to the axial fan 50 in the upstream region depends on the minimum air flow area in the upstream region. Therefore, even if the air flow area of other places in the upstream region is larger, but as long as the area of the smallest air flow surface still does not change, the air input of the axial fan 50 will not change. Therefore, the air input of the axial fan 50 can be increased only by increasing the minimum air flow area of the entire upstream region. From FIGS. 4 and 5, after the air enters the upstream region from the axial inlet 12, since the part of the upstream region close to the axial inlet 12 is not blocked, it can be guaranteed that the air flow area of this part is larger than the rotation area of the axial fan 50. The part around the motor 40 in the upstream region is defined as a surrounding region. Due to blocking by the motor 40, the air flow area of the surrounding region will be relatively small. However, in order to guarantee the high blowing efficiency, the minimum area of the air flow area of the surrounding region in the longitudinal direction is designed to be greater than the area of the rotation surface formed by the rotation of the blades 54 of the axial fan 50.

In order to take into account the rotational speed of the motor 40 and the power consumption of the blower, in some embodiments of the present application, the output power of the motor 40 is set to be different for different power supplies. For example, the nominal output voltage of the battery pack 60 is less than or equal to 20 V, and the maximum output power of the motor 40 is set to be 280 W to 400 W. The nominal output voltage of the battery pack 60 is greater than 20 V and less than 56 V, and the maximum output power of the motor 40 is set to be 500 W to 1100 W. As such, not only are the power and rotational speed of the motor 40 considered, but also the power consumption of the blower and the nominal voltage and capacity of the battery pack 60 are taken into account, which guarantees the operating duration and operating efficiency of the garden blower 100. Within this maximum output power range, the weight of the motor 40 is within the range of 0.1 kg to 0.3 kg. Therefore, the weight of the motor 40 may be set as 0.15 kg, 0.25 kg, 0.26 kg, 0.27 kg, 0.28 kg and 0.29 kg.

Further, for different types and numbers of battery packs 60, in order to achieve better blowing performance and efficiency, the role of the high rotational speed plus the machine core of the small axial fan 50 is further maximized. The inventors of the present application find that the rotational speed and diameter of the motor 40, the cross-sectional area of the axial inlet 12 and the diameter of the axial fan 50 can be further optimized and parameterized. In some embodiments, the nominal output voltage of the battery pack 60 is less than or equal to 20 V, the capacity of the battery pack is between 2 Ah and 9 Ah, the maximum rotational speed of the motor 40 is between 18000 rpm and 35000 rpm, the diameter of the motor 40 is less than or equal to 40 mm, the operating time of the battery pack is not less than 6 min, the effective ventilation area of the axial inlet 12 is less than 9000 mm$^2$, and the outer diameter of the axial fan 50 is greater than or equal to 50 mm and less than or equal to 67 mm. Therefore, the effective ventilation area of the axial inlet 12 may be 8500 mm$^2$, 7500 mm$^2$, 7000 mm$^2$, etc.

As a preferred implementation, the nominal output voltage of the battery pack 60 is less than or equal to 20 V, the capacity of the battery pack is between 2 Ah and 9 Ah, the maximum rotational speed of the motor 40 is 27000 rpm, the operating duration of the battery pack is greater than or equal to 8 min, the diameter of the motor 40 is less than or equal to 40 mm, the diameter of the axial inlet 12 is 80 mm to 100 mm, the effective ventilation area of the axial inlet is less than 6500 mm$^2$, and the diameter of the axial fan 50 is 59 mm.

In some other embodiments, when the nominal output voltage of the battery pack 60 is greater than 20 V and less than 56 V, the capacity of the battery pack 60 is between 2 Ah and 9 Ah, the maximum rotational speed of the motor 40 is between 20000 rpm and 38000 rpm, the operating duration of the battery pack is not less than 6 min, the diameter of the motor 40 is less than or equal to 45 mm, the effective ventilation area of the axial inlet 12 is less than 13000 mm$^2$, and the outer diameter of the axial fan 50 is greater than or equal to 50 mm and less than or equal to 67 mm. Therefore, the effective ventilation area of the axial inlet 12 may be 9200 mm$^2$, 9800 mm$^2$, 11000 mm$^2$, etc. As a preferred implementation, the nominal output voltage of the battery pack 60 is greater than 20 V and less than 56 V, the capacity of the battery pack 60 is between 2 Ah and 9 Ah, the maximum rotational speed of the motor 40 is 32000 rpm, the diameter of the motor 40 is less than or equal to 45 mm, the diameter of the axial inlet 12 is 100 mm to 120 mm, the operating duration of the battery pack is greater than or equal to 10 min, the effective ventilation area of the axial inlet is less than 8000 mm$^2$, and the diameter of the axial fan 50 is 60 mm.

In this way, in a layout of the high-rotational-speed motor 40 and the small axial fan 50, sizes of the motor 40, the axial fan 50 and the air duct portion 10 of the garden blower 100 are smaller. Compared with the prior art, the volume of the garden blower 100 is smaller and the weight of the whole machine is lighter, and the use experience is improved.

In some embodiments of the present application, the extension rod 20 is provided with a first end and a second end that are opposite to each other in the longitudinal direction. The first end and the second end may be two opposite ends in the longitudinal extension direction of the extension rod 20. The first end may be the distal end of the extension rod 20, and the second end may be the proximal end of the extension rod 20. The extension rod 20 can be connected with the air inlet shield 70 through the first end and connected with the operating handle 30 through the second end. When the extension rod 20 is connected with the air inlet shield 70 through the first end, the orthographic projection of the first end falling on the rotation surface formed by the rotation of the axial fan in the longitudinal extension direction of the extension rod 20 is always within the outer contour boundary of the rotation surface of the axial fan 50. It can be understood that since the axial fan 50 is mounted in the air duct portion 10, the extension rod 20 and the air duct portion 10 will not have a dimensional overlap in the radial direction. The overall shape of the garden blower is regular and the structure is compact.

Exemplarily, the holding portion 32 of the operating handle 30 extends along the longitudinal length of the second axis, the extension rod 20 and the air duct portion 10 extend along the longitudinal length of the first axis, and the first axis is parallel to the second axis. Therefore, the distance between the highest point of the operating handle 30 and the lowest point of the extension rod 20, i.e., the distance between the upper side of the holding portion 32 and the lower side of the extension rod 20, may be greater than 40 mm and less than 140 mm. As a preferred implementation, the linear distance is greater than 128 mm and less than 135 mm. More preferably, the linear distance from the highest point of the operating handle 30 to the lowest point of the extension rod 20 is 130 mm. The distance between the highest point and the lowest point of the garden blower 100 with the battery pack 60 connected may be 150 mm to 170 mm, preferably 159 mm. For example, the distance between the highest point and the lowest point of the conventional garden blower with the battery pack 60 connected as shown in FIG. 1 reaches 260 mm to 270 mm.

It should be understood that since the extension rod 20 is connected within the boundary of the outer contour of the air inlet shield 70, it is inevitable that part of the air inlet area of the air inlet shield 70 is occupied. The air input of the air inlet shield 70 is affected to a certain extent. In order to make the radial cross-sectional area of the air inlet passage formed between the air inlet shield 70 and the extension rod 20 be within a reasonable range, to guarantee the air input of the garden blower, the air flow may stably enter and flow through the fan region to form high-speed and high-pressure airflow, which effectively guarantees the performance of the garden blower. In some embodiments, the air inlet shield 70 is configured to extend in the fan axis of the axial fan 50. The axial fan 50 rotates to form a rotation surface. The projection area of the orthographic projection of the air inlet shield 70 falling, in the longitudinal direction, in the plane where the rotation surface is located is S1, and the projection area of the orthographic projection of the end of the extension rod connected with the air inlet shield 70 falling, in the longitudinal direction, in the plane where the rotation surface is located is S2. The ratio of S1 to S2 is greater than or equal to 6 and less than or equal to 16. Preferably, $8 \leq S1/S2 \leq 12$. As such, the demand for air inlet can be guaranteed to the greatest extent, which prevents the end face area of the first end of the extension rod 20 connected with the axial inlet 12 from being too large for fear of affecting the input air volume. Specifically, in one embodiment, the cross-sectional area of the first end of the extension rod 20 connected to the axial inlet 12 in the direction perpendicular to the longitudinal direction is not greater than 1256 mm$^2$ and not less than 314 mm$^2$. As a preferred implementation, the cross-sectional area of the first end of the extension rod 20 connected to the axial inlet 12 in the direction perpendicular to the longitudinal direction is not greater than 920 mm$^2$ and not less than 616 mm$^2$. It is particularly emphasized that the excessively large cross-sectional area of the extension rod 20 in the direction perpendicular to the longitudinal direction will certainly affect the input air volume and the light weight of the whole machine, while the excessively small cross-sectional area will reduce the reliability of the extension rod 20 due to the fact that the air duct portion 10 and the battery pack 60 need to be supported from the front and back by means of the extension rod 20. Therefore, the cross-sectional area of the end of the extension rod 20 connected to the axial inlet 12 in the direction perpendicular to the longitudinal direction is set within the aforementioned specific range, which can guarantee the input air volume and performance of the garden blower while taking into account the light weight and reliability of the whole machine.

Further, the garden blower is basically operated by the user to hold a machine with hand. For a hand-held device, the user may experience arm fatigue when holding for a long time, especially for a hand-held device operated with one hand. Therefore, it has always been a difficult problem to be solved that the whole machine can be substantially compressed in volume and weight under substantially similar performance. In the aforementioned embodiment, through the ingenious design of the short air duct portion 10, the cross-sectional dimension is also reduced after superposition of the air duct portion 10, the volume and weight of the whole machine are significantly changed in a case that both the longitudinal dimension and the radial dimension are reduced. It should be pointed out that one end of the air inlet shield 70 is connected to the axial inlet 12, and the other end thereof is supported on the extension rod 20. Therefore, the air inlet shield 70 will affect the overall radial dimension. One end of the air inlet shield 70 is connected to the axial inlet 12 of the air duct portion 10, and thus, the cross-sectional dimension of the air duct portion 10 is reduced, and the cross-sectional dimension of the air inlet shield 70 is also certainly reduced, which is conducive to reducing the overall dimension. Specifically, in some embodiments, in the direction perpendicular to the longitudinal direction, the cross-sectional area of the end of the air inlet shield 70 connected to the axial inlet 12 is less than 13300 mm$^2$. Preferably, in the direction perpendicular to the longitudinal direction, the cross-sectional area of the end of the air inlet shield 70 connected to the axial inlet 12 is not less than 3800 mm$^2$ and not greater than 11300 mm$^2$.

Specifically, in some embodiments, the air inlet shield 70 is approximately arc-shaped, with a diameter of 110 mm. The cross-sectional area of the extension rod 20 in the radial direction is 907 mm². In other words, the ratio of the projection area S1 of the orthographic projection of the air inlet shield 70 falling, in the longitudinal direction, in the plane where the rotation surface is located to the projection area S2 of the orthographic projection of the end of the extension rod 20 connected to the air inlet shield 70 falling, in the longitudinal direction, in the plane where the rotation surface is located is about 10.47. Further, the extension distance of the air inlet shield 70 in the fan axis of the axial fan 50 is not less than 62 mm. As such, the input air volume of the garden blower is further guaranteed, and thereby, the performance requirements of the garden blower can be met.

FIG. 7 shows a schematic cross-sectional view of the position of an air inlet shield of a garden blower in a first operating state in one of embodiments. FIG. 8 is a schematic cross-sectional view of an air inlet shield of the garden blower shown in FIG. 7 in a B-B direction;

For a layout of "thin" air passages, it is necessary to consider that a connected fixed structure of the air inlet shield 70 and the extension rod 20 blocks the inlet air as little as possible, further reducing the loss of the input air volume. In some embodiments, referring to FIGS. 7 and 8, the air inlet shield 70 is provided with a plug-in portion 72 extending by a preset distance in the longitudinal direction. The shield holes 74 are distributed circumferentially in the periphery of the plug-in portion. The garden blower further comprises a first connecting structure (not shown in the figure). The first end of the extension rod 20 is connected with the plug-in portion 72 of the air inlet shield 70 through the first connecting structure. The orthographic projection of the first connecting structure falling, in the extension direction of the extension rod 20, in the plane where the rotation surface of the axial fan 50 is located substantially does not coincide with the orthographic projection of the shield hole 74 falling, in the extension direction of the extension rod 20, in the plane where the rotation surface is located. On the whole, the first connecting structure is located on an inner ring of the air inlet shield 70, and the shield holes 74 are located in the periphery of the plug-in portion 70. Thus, the first connecting structure and the shield hole do not interfere with each other and do not block each other. Therefore, when the air inlet shield 70 is fitted with the extension rod 20, the first connecting structure will not occupy the area of the shield hole 74, and thus, the input air volume will not be affected. Specifically, in the embodiment shown in FIG. 8, the cross section of the plug-in portion 72 in the direction perpendicular to the longitudinal extension direction of the extension rod 20 is elliptical. In some other embodiments, the cross section may also be circular or square, which is not limited here.

It should be noted that the orthographic projection of the first connecting structure falling, in the extension direction of the extension rod 20, in the plane where the rotation surface of the axial fan 50 is located substantially does not coincide with the orthographic projection of the shield hole 74 falling, in the extension direction of the extension rod 20, in the plane where the rotation surface is located. The "substantially not coincide" here refers to that the maximum linear dimension of the projection of the first connecting structure in the plane where the rotation surface is located and the projection of the shield hole 74 in the plane where the rotation surface is located being separated, tangential or intersected is within 5 mm. Further, taking a fixing method of screwing as an example, in such fixing method that screws are inserted from the outer edge of the air inlet shield 70 and connected onto the extension rod 20, the screws occupy a large dimension in the radial direction, so that the maximum linear dimension of the projection of the first connecting structure in the plane where the rotation surface is located and the projection of the shield hole 74 in the plane where the rotation surface is located being intersected is greater than 5 mm. As such, part of the air inlet area is sacrificed, and the mounting steps are more complex. Therefore, in the fixing method of screwing, the orthographic projection of the first connecting structure falling, in the extension direction of the extension rod 20, in the plane where the rotation surface of the axial fan 50 is located and the orthographic projection of the shield hole 74 falling, in the extension direction of the extension rod 20, in the plane where the rotation surface is located do not belong to the "substantially not coincide" defined above.

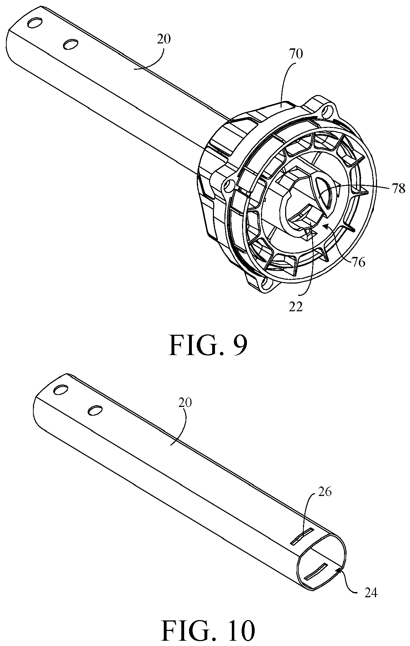

In some embodiments, the plug-in portion 72 is configured as a hollow plug-in pore passage, and the first end of the extension rod 20 is plugged in and locked into the plug-in portion 72 to realize a locking connection there between. In some other embodiments, the plug-in portion 72 on the air inlet shield 70 may also be configured to be inserted and locked in an inner cavity of the first end of the extension rod 20. It should be understood that the first end of the extension rod 20 and the plug-in portion 72 are wrapped with each other and extends by a certain distance in the longitudinal direction, so that the joint area of the extension rod 20 and the air inlet shield 70 is increased, thus improving the connection strength between the extension rod 20 and the air inlet shield 70. For example, in the embodiment where the plug-in portion 72 is configured as the hollow plug-in pore passage, since the plug-in portion 72 has a certain extension length in the longitudinal direction, the extension rod 20 may be wrapped in the circumferential direction of the extension rod 20, so that the connection strength and stability of the extension rod 20 and the air inlet shield 70 are better. FIG. 9 shows a schematic view of a fitting relationship between an extension rod and an air inlet shield when its positioning piece is in a locking state in one of embodiments. FIG. 10 shows a schematic structural view of the extension rod when its positioning piece shown in FIG. 9 is in a natural state.

In some embodiments, as shown in FIGS. 9 to 10, the first connecting structure comprises a fitting piece provided on the extension rod 20, and a locking piece provided on the plug-in pore passage. The locking piece may be defined as a positioning hole 76 in the inner wall of the plug-in portion, and the fitting piece may be a shape-adjustable positioning piece 22 provided close to the outer wall of the first end of the extension rod 20 or provided on the first end of the extension rod 20. The positioning piece 22 has a locking state of being clamped with the inner wall of the positioning hole 76. In the locking state, the outer contour of the positioning piece 22 exceeds that of the inner wall surface of the positioning hole 76 in the radial direction, so as to restrict the extension rod 20 from coming off backwards from the plug-in pore passage. Specifically, in some embodiments, the positioning piece 22 has a natural state in which the shape of the positioning piece is kept inserted into the plug-in pore passage (see FIG. 10), and a locking state of changing its shape when subjected to an external acting forces (see FIG. 9). In the natural state, the positioning piece 22 is in a preset position corresponding to the positioning hole 76. In the locking state, the outer contour of the positioning piece 22 exceeds that of the inner wall surface of the positioning hole 76 in the radial direction, so as to restrict the extension rod 20 from coming off backwards from the plug-in pore passage.

Specifically, the inner wall of the plug-in portion 72 is provided with a plurality of positioning holes 76. The plurality of positioning holes 76 are spaced-distributed in the circumferential direction of the plug-in portion 72. The positioning piece 22 is adjustable in shape, which can be of a rigid structure or an elastic structure. Specifically, in one embodiment, when the positioning piece 22 is of the rigid structure, such as an aluminum plate, and is switched from the natural state to the locking state, the operator needs to push out the positioning piece 22 outwards by using an auxiliary piece, so that the positioning piece 22 changes its shape and is expanded outwards. When the positioning piece 22 is of the elastic structure, and is switched from the natural state to the locking state, the positioning piece 22 releases accumulated elastic potential energy, so that the positioning piece 22 changes its shape and is expanded outwards.

It should be emphasized that after the air inlet shield 70 and the extension rod 20 are connected, the first connecting structure is located inside the air inlet shield 70 as a whole, and the stability of the first connecting structure is guaranteed by accommodating the first connecting structure in the air inlet shield 70 as a whole. When the extension rod 20 is joined with the air inlet shield 70, the positioning piece 22 of the extension rod 20 is switched from the natural state to the locking state in the positioning hole 76 to restrict the extension rod 20 from coming off from the plug-in pore passage.

In some other embodiments, the fitting piece may also be defined as a groove sunk from the wall surface of the extension rod 20. The groove may be an opening passing through inside and outside, or a semi-closed groove. The locking piece may be defined as a protrusion protruding inwards from the inner wall surface of a plug-in portion 22 or the end edge of the plug-in portion 72. The protrusion may be a buckle. When the plug-in portion 72 is inserted into and coupled with the inner cavity of the extension rod 20, the air inlet shield 70 and the extension rod 20 may form locking fit through the groove and the protrusion.

In some embodiments, the plug-in portion 72 is provided with an open end for inserting the extension rod 20. The open end can be necked inwards to form a necking structure. The maximum outer contour dimension of the open end is greater than that of the extension rod 20 at the positioning piece 22. Specifically, when joined with the plug-in portion 72, the first end of the extension rod 20 may be easily inserted into the plug-in portion 72 without using a large external force to connect the first end of the extension rod 20 into the plug-in portion 72.

In some embodiments, as shown in FIG. 9, the first connecting structure further comprises a stop portion 78 provided at the tail end of the plug-in portion 72. The stop portion 78 can be abutted with the tail end of the extension rod 20 to prevent the extension rod 20 from moving forward from the plug-in pore passage of the plug-in portion 72. Specifically, the stop portion 78 is a stopper protruding towards the plug-in pore passage. When the positioning piece 22 is in the locking state, the first end of the extension rod 20 is abutted with the stop portion 78, and the first end of the extension rod 20 is limited between the positioning hole 76 and the stop portion 78 to prevent the extension rod 20 from jumping in the axial direction of the plug-in pore passage. When the positioning piece 22 of the extension rod 20 is clamped with the positioning hole 76, the first end of the extension rod 20 can simultaneously push against the stop portion 78 to implement axial positioning.

In some embodiments, as shown in FIG. 10, the extension rod 20 is provided with a hole slot 26 in the outer wall close to the first end. The positioning piece 22 can be formed between the hole slot 26 and the end edge of the first end. The distance between the hole slot 26 and the end edge of the first end is configured to be equal to the distance between the positioning hole 76 and the stop portion 78. In this embodiment, the positioning piece 22 may be formed on the extension rod 20 in manner of punch forming. The manufacturing method is relatively simple, and other materials are not needed, so that the cost is lower.

It can be understood that the extension rod 20 not only plays a role in connecting the operating handle 30 with the air duct portion 10, but also plays a role in supporting. Therefore, a support material of the extension rod 20 needs to have certain strength. In some preferred embodiments, the extension rod 20 is made of an aluminum tube material, which has a certain support strength. A support piece made of the aluminum tube material is more lightweight and portable. Preferably, the wall thickness of the extension rod 20 is 1 mm to 2 mm, which has a relatively small volume.

In one aspect, since the first end of the extension rod 20 occupies the effective ventilation area of the air inlet shield 70, the air inlet shield 70 sacrifices part of the air inlet area. In another aspect, due to the layout of the "thin" air passages, the air input of the blower will be certainly affected greatly. In order to compensate for losses caused by the above structural design, auxiliary airflow may be delivered by the extension rod 20. Specifically, as shown in FIGS. 9 and 10, the extension rod 20 may be roughly of a hollow tubular structure, which has an auxiliary air passage (not shown in the figure), and an airflow inlet and an airflow outlet 24 communicating with the auxiliary air passage. The airflow outlet 24 communicates with the air duct portion 10. The airflow inlet communicates with the external airflow, and the auxiliary airflow is formed through the auxiliary air passage. The auxiliary airflow and main airflow entering from the shield holes 74 converge at the axial fan.

In some embodiments, the airflow outlet 24 may be provided close to the first end, for example, the airflow outlet may be provided at the lower part of the first end, or directly provided at the end portion of the first end. In other words, the first end is open, which is configured to make the auxiliary air passage and the air duct portion 10 communicate, so that the airflow in the auxiliary air passage can enter the air duct portion 10 through the airflow outlet 24. The airflow inlet may be provided close to the second end, and is located at an outer part of the extension rod 10 placed on the operating handle, or the airflow inlet is provided close to the second end, and is located at an inner part of the extension rod 20 placed on the operating handle 30, or the airflow inlet is provided at the end portion of the second end, in other words, the second end is open. Specifically, in one of embodiments, when the airflow inlet is located at the end portion of the second end or located at the inner part of the extension rod 20 placed on the operating handle 30, in order to introduce the external airflow into the auxiliary air passage of the extension rod 20, a secondary inlet 36 (see FIG. 7) communicating with the airflow inlet may be formed in the operating handle 30. The secondary inlet 36 is configured to make the outside airflow and the auxiliary air passage communicate. When the motor 40 operates, a negative pressure region will be generated close to the first end of the extension rod 20, and thus, the outside air may be pumped by the airflow inlet to enter the auxiliary air passage of the extension rod 20. The auxiliary airflow is formed in the extension rod 20.

Further, in order to guarantee that the garden blower has a certain blowing force and meets the performance requirement, the radial dimension of the garden blower is smaller, and the whole machine is more compact, the air speed of the garden blower needs to be increased. The cross-sectional area of a primary blow hole 14 of a primary blowing tube 11 in the present application in the direction perpendicular to the longitudinal direction is relatively small, which can pressurize the inflowing airflow to form a higher air speed. For example, the cross-sectional area of the primary blow hole 14 of the primary blowing tube 11 in the direction perpendicular to the longitudinal direction is less than 4000 mm². However, due to the relatively small radial dimension of the primary blowing tube 11, the axial inlet 12 and the primary blow hole 14 will limit the air volume. In order to compensate for the input air volume, in some embodiments, the air duct portion 10 comprises the primary blowing tube 11 and a auxiliary blowing tube 13 communicating with the primary blowing tube 11. A gap for the external airflow to enter the auxiliary blowing tube 13 may be formed between the primary blowing tube 11 and the auxiliary blowing tube 13.

In some embodiments, the garden blower can be switched between a first operating mode in which air is exhausted at a relatively high air speed and a relatively low air volume and a second operating mode in which air is exhausted at a relatively low air speed and a relatively high air volume, through the auxiliary blowing tube 13. Specifically, the primary blowing tube 11 fluidly communicates with the auxiliary blowing tube 13. The primary blowing tube 11 is supported at the distal end of the extension rod 20. There is the aforementioned gap between the primary blowing tube 11 and the auxiliary blowing tube 13, so that the outside air can enter the auxiliary blowing tube 13 through the gap, thus increasing the air volume of the garden blower 100. The proximal end of the primary blowing tube 11 is provided with the axial inlet 12. The distal end of the primary blowing tube 11 is provided with the primary blow hole 14 opposite to the axial inlet 12 (see FIG. 4). The auxiliary blowing tube 13 is provided with a auxiliary inlet communicating with the primary blow hole 14, and a pipe orifice located at the distal end of the auxiliary inlet in the longitudinal direction. The pipe orifice forms an outlet. The auxiliary inlet surrounds at least part of the primary blow hole 14. The cross-sectional area of the outlet of the auxiliary blowing tube 13 in the direction perpendicular to the longitudinal direction is greater than that of the primary blow hole 14, and the gap for the outside air to flow into the auxiliary blowing tube 13 is formed between the inner ring of the auxiliary inlet and the outer ring of the primary blow hole 14. By setting the auxiliary blowing tube 13, in a case that the garden blower 100 has high air speed, the blow volume of the garden blower 100 can also meet the need.

Further, the auxiliary blowing tube 13 and the primary blowing tube 11 are movably connected, so that the garden blower can be switched between the first operating mode and the second operating mode. It should be noted that the movable connection can be understood as that the auxiliary blowing tube 13 can be detachably separated from the primary blowing tube 11, and the auxiliary blowing tube 13 can be retracted backward by a preset distance or stretch out forward, so that the garden blower 100 is switched between the first operating mode and the second operating mode. Specifically, the garden blower 100 is in the first operating mode, and the outside air enters from the axial inlet 12 and blows out from the primary blow hole 14. The garden blower 100 is in the second operating mode, and the outside air enters from the axial inlet 12 and blows out from the pipe orifice of the auxiliary blowing tube 13 in the second operating mode. The user can freely choose the first operating mode or the second operating mode according to the cleaning requirements. The user can choose a matching mode according to different working conditions for operations. Exemplarily, when it is necessary to sweep courtyards, parks, streets and other places covered with fallen leaves, the user may choose the second operating mode with the relatively large air volume and relatively low air speed to quickly gather the fallen leaves in the sweeping region in unit time. When it is necessary to sweep wet leaves adhering to the ground, the user may choose the first operating mode with the relatively small air volume and relatively high air speed to quickly strip the foreign objects from the ground with a sufficient force.

It should be noted that when the garden blower is in the first operating mode, the axial outlet of the garden blower 100 is the primary blow hole 14 of the primary blowing tube 11. When the garden blower is in the second operating mode, the axial outlet of the garden blower 100 is the outlet of the auxiliary blowing tube.

In order to increase the air flow flowing into the auxiliary blowing tube 13 through the gap to the maximum extent, the auxiliary inlet is in a shape of a horn expanding outwards, and the cross-sectional area of the auxiliary inlet in the direction perpendicular to the longitudinal direction is greater than that of its outlet. Since the cross-sectional area of the auxiliary inlet increases, the air speed of the airflow flowing into the auxiliary blowing tube 13 at the front end of the auxiliary inlet will naturally decrease. In some embodiments, the auxiliary blowing tube 13 is configured as a truncated cone to compress the airflow entering the auxiliary blowing tube 13, which increases the air speed again. In addition, considering that the cross-sectional area of the outlet of the auxiliary blowing tube 13 cannot be configured too small, the air volume will be affected if the outlet has an excessively small dimension. Specifically, the ratio of the cross-sectional area of the outlet of the auxiliary blowing tube 13 in the direction perpendicular to the longitudinal direction to the cross-sectional area of the primary blow hole 14 is between 2 and 3.5. Specifically, in one of embodiments, the included angle formed between the outer wall of the auxiliary blowing tube 13 and the fan axis is about 3 to 9 degrees. The air pressure in the auxiliary blowing tube 13 can be increased while the air volume is not affected.

It should also be understood that the air entering the air duct portion 10 from the axial inlet 12 converges into high-speed moving airflow under the rotation of the axial fan 50, and diffuses from the axial inlet 12 to the primary blow hole 14. The airflow diffusing from the axial inlet 12 to the primary blow hole 14 comprises a high-speed zone around the fan axis of the axial fan 50 and a low-speed zone on the periphery of the high-speed zone. In order to increase the air flow flowing into the primary blowing tube 11 to the maximum extent, the cross-sectional area of the axial inlet 12 is designed larger, while the cross-sectional area of the downstream region remains substantially unchanged during flowing of the airflow to the primary blow hole 14. In one aspect, in order to maintain the flow rate of the airflow at a relatively high level to the maximum extent, the cross-sectional area of the primary blow hole 14 is smaller than that of the axial inlet 12. In another aspect, when the auxiliary blowing tube 13 operates, due to the increase of the cross-sectional area of the auxiliary inlet, the air speed of the airflow flowing into the auxiliary blowing tube 13 at the front end of the auxiliary inlet naturally decreases, and the airflow is mixed with low-speed airflow. However, if the high-speed airflow and the low-speed airflow are not evenly mixed, the blowing effect will also be affected. Therefore, the cross-sectional area of the axial inlet 12 and the cross-sectional area of the primary blow hole 14 together constrain and affect the final air speed of the outlet air. If the cross-sectional area of the axial inlet 12 is too large, and the cross-sectional area of the outlet of the primary blow hole 14 or the auxiliary blowing tube 13 is too small, formation of the stable high-speed airflow is not facilitated. In some embodiments of the present application, the ratio of the cross-sectional area of the axial inlet 12 to the cross-sectional area of the primary blow hole 14 is set to be less than 1.65, so that the flow rate of the airflow is kept at a relatively high level. In the second operating mode, uneven mixing with the low-speed airflow will not occur, which avoids airflow turbulence, guarantees the length and cross-sectional area of the high-speed air flow from the axial outlet, and further improves the blowing effect of the garden blower 100.

As shown in FIGS. 4 to 5, in some embodiments, the primary blowing tube 11 is provided with a first clamping slot 112 and a second clamping slot 114 provided at intervals in its axis direction, and the auxiliary blowing tube 13 is provided with a limiting portion 134 fitted with the first clamping slot 112 and the second clamping slot 114. The first clamping slot 112 is closer to the axial fan 50 and the motor 40 than the second clamping slot 114. When the limiting portion 134 is clamped to the first clamping slot 112, the primary blow hole 14 is exposed, and the outside air enters from the axial inlet 12 and blows out from the primary blow hole 14. In other words, the garden blower is in the first operating mode. When the limiting portion 134 is clamped to the second clamping slot 114, the primary blow hole 14 is hidden in the auxiliary blowing tube 13, and the outside air enters from the axial inlet 12 and blows out from the pipe orifice of the auxiliary blowing tube 13. In other words, the garden blower is in the second operating mode. Specifically, in one embodiment, the primary blowing tube 11 is further provided with guide rails (not shown in the figure) in its axis direction, and the auxiliary blowing tube 13 is slidably connected to the primary blowing tube 11 in the axis direction of the primary blowing tube 11 by means of the guide rails. The limiting portion 134 is provided with a clamping end for being fitted with the first clamping slot 112 and the second clamping slot 114, and a pressing end for being pressed. An elastic piece 136 is further provided between the pressing end and the primary blowing tube 11. The clamping end and the pressing end are configured to form two ends of a lever. When the pressing end is pressed, the elastic piece 136 is compressed, and a clamping portion can be separated from the first clamping slot 112 or the second clamping slot 114. When the pressing end is released, the elastic piece 136 recovers its deformation, to force the clamping end to be clamped into the first clamping slot 112 or the second clamping slot 114, thus realizing axial limiting between the auxiliary blowing tube 13 and the primary blowing tube 11.

Exemplarily, in some embodiments, the nominal output voltage of the battery pack 60 is less than or equal to 20 V, the capacity of the battery pack 60 is between 2 Ah and 9 Ah, the maximum rotational speed of the motor 40 is between 18000 rpm and 35000 rpm, the weight of the garden blower 100 without the battery pack 60 connected is not more than 1.8 kg, preferably not more than 1.5 kg, the maximum air speed of the garden blower 100 in the first operating mode is between 90 mph and 110 mph, the maximum air volume of the garden blower 100 in the second operating mode is between 350 cfm and 500 cfm, and the operating duration of the battery pack is not less than 6 min. Specifically, the nominal output voltage of a single battery pack 60 is 20 V, the capacity of the battery pack 60 is 4 Ah, the maximum rotational speed of the motor 40 is between 20000 rpm and 30000 rpm, and the weight of the blower without the battery pack 60 connected is not more than 1.5 kg. The maximum air speed of the blower in the first operating mode is between 90 mph and 100 mph, the maximum air volume in the second operating mode is between 380 cfm and 480 cfm, and the operating duration of the battery pack is not less than 10 min.

In some other embodiments, the nominal output voltage of the battery pack 60 is greater than 20 V and less than 56 V, the capacity of the battery pack 60 is between 2 Ah and 9 Ah, the maximum rotational speed of the motor 40 is between 20000 rpm and 38000 rpm, the weight of the garden blower 100 without a power supply connected is not more than 2 kg, preferably not more than 1.8 kg, the maximum air speed of the garden blower 100 in the first operating mode is between 110 mph and 180 mph, the maximum air volume of the garden blower 100 in the second operating mode is between 420 cfm and 650 cfm, and the operating duration of the battery pack is not less than 6 min. Specifically, the garden blower comprises a first battery pack and a second battery pack that supply power to the motor 40. The nominal output voltage of the first battery pack and the nominal output voltage of the second battery pack are both 20 V, the capacity of each of the battery packs is 4 Ah, the weight of the blower without the battery packs connected is not more than 1.8 kg, and the maximum rotational speed of the motor 40 is between 20000 rpm and 38000 rpm. The maximum air speed of the blower in the first operating mode is between 130 mph and 165 mph, the maximum air volume in the second operating mode is between 480 cfm and 630 cfm, and the operating duration of the battery pack is not less than 10 min. In the prior art, the weight of the garden blower 100 with similar performance is relatively heavy, while the garden blower in the embodiment of the present application effectively improves the user's experience on the premise of meeting the air volume and air speed performance requirements.

Compared with that of a conventional blower, the overall length of the air duct portion 10 of the present application is shortened. As such, the flow resistance of the airflow in the air duct portion 23 is reduced, and the whole machine may have a relatively small volume. Specifically, the ratio of the length of the air duct portion 10 in the longitudinal direction to the overall length of the garden blower 100 in the longitudinal direction is less than or equal to 70%, and the maximum rotational speed of the motor is configured to be greater than or equal to 18000 rpm, and less than or equal to 40000 rpm. Preferably, the ratio of the length of the air duct portion 10 in the longitudinal direction to the overall length of the garden blower 100 in the longitudinal direction is less than or equal to 65%, and the maximum rotational speed of the motor is configured to be greater than or equal to 18000 rpm, and less than 38000 rpm. Specifically, the overall length is 850 mm to 1000 mm, the air duct portion 10 is linear, and the length of the air duct portion 10 is not greater than 600 mm. Therefore, the length of the air duct portion may be 600 mm, 580 mm, 560 mm, 540 mm, 520 mm, 500 mm, 480 mm, 460 mm, 440 mm, etc. Preferably, the length of the air duct portion 10 is between 440 mm and 560 mm.

Specifically, in some embodiments, the nominal output voltage of a single battery pack is less than or equal to 20 V, the capacity of the battery pack is between 2 Ah and 9 Ah, the maximum rotational speed of the motor is between 18000 rpm and 35000 rpm, and the length of the air duct portion is less than or equal to 600 mm, which may be 450 mm specifically. When the nominal output voltage of a single battery pack is greater than 20 V and less than 56 V, the maximum rotational speed of the motor is between 20000 rpm and 38000 rpm, and the length of the air duct portion is less than or equal to 570 mm, which may be 500 mm specifically. The longitudinal length of the garden blower 100 is generally not less than 750 mm. Therefore, the longitudinal length of the garden blower 100 may be 850 mm, 880 mm, 920 mm, 950 mm or 989 mm.

In the present application, the length of the air duct portion 10 is shortened, which can reduce the air speed attenuation. Therefore, the length of the primary blowing tube 11 is certainly reduced. Specifically, the length of the primary blowing tube 11 may be configured to be not greater than 450 mm. Specifically, in one of embodiments, when the nominal output voltage of the battery pack is less than or equal to 20 V, for example, the nominal output voltage of a single battery pack is not greater than 20 V, and the capacity of the single battery pack is 2 Ah to 5 Ah. There is 1 battery pack, or there are 2 battery packs, and the 2 battery packs are connected in series or in parallel. The maximum rotational speed of the motor is between 18000 rpm and 35000 rpm, and the length of the primary blowing tube 11 is less than or equal to 400 mm, which may be 350 mm specifically. When the nominal output voltage of the battery pack is greater than 20 V and less than 56 V, for example, the nominal output voltage of a single battery pack is greater than 20 V, the capacity of the single battery pack is 4 Ah. There are 2 battery packs, and the 2 battery packs are connected in series or in parallel. The maximum rotational speed of the motor is between 20000 rpm and 38000 rpm, and the length of the primary blowing tube 11 is less than or equal to 420 mm, which may be 380 mm specifically.

It should be understood that if the longitudinal length of the auxiliary blowing tube 13 is too long, the airflow loss is certainly big, and it is impossible to maintain the ideal length of a high-speed wake flow region formed by the airflow from its outlet, and the large cross-sectional area of the high-speed wake flow region cannot be guaranteed. Certainly, if the length of the auxiliary blowing tube 13 in the longitudinal direction is too short. The airflow in the high-speed region and the airflow in low-speed region entering the auxiliary blowing tube 13 from the auxiliary inlet are not evenly mixed, and the airflow turbulence occurs, which affects the air outlet effect of the outlet of the auxiliary blowing tube 13. Therefore, in some embodiments, the length of the auxiliary blowing tube 13 in the longitudinal direction is set between 100 mm and 160 mm. Preferably, in the aforementioned embodiment, the length of the auxiliary blowing tube 13 is between 110 mm and 140 mm.

It is particularly pointed out that the garden blower as a whole forms a lever structure with a part held by the user as a fulcrum. Both ends of the lever structure are provided with the battery pack 60 and the machine core containing the air inlet shield 70 and the air duct portion 10 respectively. Specifically, an element connected to the distal end of the extension rod 20 is positioned as the first weight unit (comprising the air inlet shield 70, the motor 40, the axial fan 50, the guide structure 80 (comprising the guide cone 82, the stationary blades 54) and the outer housing wrapping these elements). An element connected to the proximal end of the extension rod 20 is defined as the second weight unit (the operating handle 30 and the battery pack 60). In order to reduce the weight of the garden blower 100, it is necessary to reduce the weight of the above weight units as much as possible. The first weight unit and the second weight unit have a great impact on the center of gravity of the garden blower. It is necessary to guarantee that the center of gravity of the garden blower 100 with the battery pack 60 connected is close to the operating handle 30 to improve the user's operating experience.

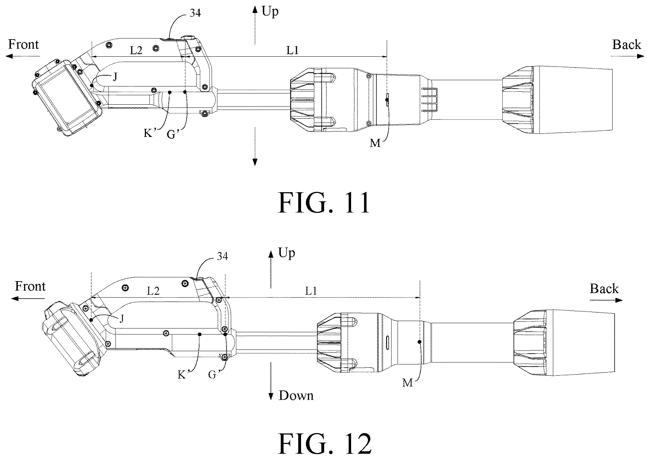

FIG. 11 shows a schematic positional view of the center of gravity of a first weight unit, the center of gravity of a second weight unit and the center of gravity of a whole machine of the garden blower in another embodiment of the present application. FIG. 12 shows a schematic positional view of the center of gravity of a first weight unit, the center of gravity of a second weight unit and the center of gravity of a whole machine of the garden blower in yet another embodiment of the present application.

Referring to FIG. 11, in some embodiments, the battery pack 60 comprises a first battery pack and a second battery pack fitted with the battery pack mounting portion. For example, the nominal output voltage of the first battery pack and the nominal output voltage of the second battery pack are both 20 V, the capacity is 5 Ah, and the total weight of the first battery pack and the second battery pack is about 1.2 kg to 1.4 kg. At this time, the weight of the second weight unit is greater than that of the first weight unit, and the center of gravity of the whole machine is at the back. The ratio of the weight of the second weight unit to the total weight of the garden blower 100 provided with the battery pack 60 is not greater than 0.5. The ratio of the weight of the second weight unit to the weight of the first weight unit is not more than 2.5. Preferably, the ratio of the weight of the second weight unit to the weight of the first weight unit is not more than 2.3, and not less than 1.05. For example, after overall miniaturization, the weight of the second weight unit is 1.96 kg, and the weight of the second weight unit is 0.88 kg.

In the longitudinal extension direction of the extension rod 20, the orthographic projection of the center of gravity of the garden blower combined with the battery pack 60 in a plane perpendicular to the rotation surface of the axial fan 50 is G'. The orthographic projection of the front end of the control switch 34 close to the extension rod 20 in the plane perpendicular to the rotation surface of the axial fan 50 is K'. The orthographic projection G' is configured to be within 70 mm forward and backward from the orthographic projection K'. Preferably, the orthographic projection G' of the overall center of gravity in the plane perpendicular to the rotation surface of the axial fan 50 is 35 mm forward to the projection K'. By mounting the battery pack 60 on the rear side of the whole machine, the position of the center of gravity G' of the garden blower is balanced (the center of gravity G' here is understood as the projection of the center of gravity of the whole machine in the state of being fitted with the battery pack). Since the weight of the garden blower in the implementation is relatively low, in terms of weight, the fatigue of the user holding the machine has been greatly relieved.

The distance between the orthographic projection of the center of gravity M of the first weight unit in the plane perpendicular to the rotation surface of the axial fan 50 and the orthographic projection G' is L1. The distance between the orthographic projection of the center of gravity J of the second weight unit in the plane perpendicular to the rotation surface of the axial fan 50 and the orthographic projection G' is L2. In the longitudinal extension direction of the extension rod 20, the distance L2 is within 40% to 60% of the distance L1. The length of the extension rod 20 exposed to the outside is configured to be within 110 mm to 135 mm. The longitudinal length of the first weight unit is between 480 mm and 650 mm.

The length of the extension rod 20 exposed to the outside is the length of the extension rod 20 after a part combined with the air inlet shield 70 and the operating handle 30 is removed. In this way, the overall length of the air duct portion 10 connected to the distal end of the extension rod 20 is shorter. As such, the flow resistance of the airflow in the air duct portion 10 is reduced, and the maximum radial dimension of the air duct portion 10 can be shortened. In a case that the length and maximum radial dimension of the air duct portion 10 are shortened, the volume of the air duct portion 10 is greatly reduced, thus implementing the miniaturization of the whole machine.

Thus, when the battery pack 60 is connected onto the battery pack mounting portion, the ratio of the longitudinal distance between the center of gravity of the garden blower 100 provided with the battery pack 60 and the foremost edge of the axial outlet 12 to the longitudinal length of the garden blower 100 is not less than 0.75. Preferably, the ratio of the longitudinal distance between the center of gravity of the garden blower 100 provided with the battery pack 60 and the foremost edge of the axial outlet 12 to the longitudinal length of the garden blower 100 is not less than 0.8. Specifically, in one of embodiments, the first battery pack and the second battery pack are provided close to the operating handle 30. The projection of the center of gravity of the garden blower 100 provided with the first battery pack and the second battery pack on the extension rod 20 is within a range of the projection of the operating handle 30 on the extension rod 20. As such, when the garden blower 100 is connected with the battery pack 60, a reasonable configuration of the battery pack 60 not only can adjust the center of gravity G' of the whole machine, and improve the comfort of the hand-held mode, but also maintains the operating time of the machine. In this implementation, the configuration of the two battery packs 60 can maintain the operating time of the machine more than or equal to 8 min. In order to avoid increasing the longitudinal length of the garden blower 100, the battery pack mounting portion is located below the operating handle 30, and projections of the battery pack mounting portion and the operating handle 30 on the extension rod 20 at least partially coincide.

In some other embodiments, as shown in FIG. 12, the battery pack mounting portion is provided close to the proximal end of the extension rod 20. There may be one battery pack that supplies power to the motor 40.

The nominal output voltage of the battery pack is less than or equal to 20 V, the capacity of the battery pack is 2 Ah to 9 Ah, and the maximum rotational speed of the motor 40 is between 18000 rpm and 35000 rpm. The weight of the garden blower without the battery pack connected is not more than 1.8 kg, and the maximum air speed in the first operating mode is between 90 mph and 110 mph, the maximum air volume in the second operating mode is between 350 cfm and 500 cfm, and the operating duration of the battery pack is not less than 8 min. In the longitudinal extension direction of the extension rod 20, the orthographic projection of the center of gravity of the garden blower combined with the battery pack in a plane perpendicular to the rotation surface of the axial fan 50 is G'. The orthographic projection of the front end of the control switch 34 close to the extension rod in the plane perpendicular to the rotation surface of the axial fan is K'. The orthographic projection G' is configured to be within 100 mm forward and backward from the orthographic projection K'. Preferably, the weight of the blower without the battery pack connected is not more than 1.5 kg, and the projection G' is configured to be within 50 mm forward and backward from the projection K'. By mounting the battery pack on the rear side of the whole machine, the position of the center of gravity G' of the blower is balanced (the center of gravity G' here is understood as the projection of the center of gravity of the whole machine in the state of being fitted with the battery pack). Since the weight of the blower in the implementation is relatively low, in terms of weight, the fatigue of the user holding the machine has been greatly relieved.

Further, in order to make the center of gravity of the whole machine as close as possible to the operating handle 30, not only is the weight of the machine core reduced, and the operating comfort of the whole machine adjusted, but also the length of the extension rod 20 is reduced, and an arm of force between the machine core and the control switch 34 is shortened. However, when the length of the extension rod 20 exposed to the outside is too short, the overall length of the air duct portion 10 connected to the extension rod 20 will certainly be larger. The lengthened air duct portion 10 will affect the miniaturization of the whole machine. In addition, the longer the air duct portion 10 is, the bigger the airflow loss, which will affect the performance of the whole machine.

Further, as shown in FIG. 12, the distance between the projection of the center of gravity M of the first weight unit in the plane perpendicular to the rotation surface of the axial fan 50 and the projection G' is L1. The distance between the projection of the center of gravity of the second weight unit J in the plane perpendicular to the rotation surface of the axial fan 50 and the projection G' is L2. In the longitudinal extension direction of the extension rod 20, the distance L2 is within 60% to 80% of the distance L1. The length of the extension rod 20 exposed to the outside is configured to be within 100 mm to 140 mm. The longitudinal length of the first weight unit is between 420 mm and 560 mm.

It should be noted that distance L1 and distance L2 are the distance between the orthographic projections of the blower in the plane perpendicular to the rotation surface when the blower is in a horizontal state.

In the embodiment of the present application, the battery pack can be fitted to at least two different types of hand-held tools, such as a grass trimmer, a chain saw, a lawn mower, a blower, a blow-suction machine, an electric drill, an electric saw, a hedge trimmer, a high washer and other battery-type hand-held tools. The weight of the second weight unit is not greater than 140% of the first weight unit and not less than 105% of the first weight unit. For example, after the miniaturization of the whole machine, the weight of the first weight unit is 0.7 kg, and the weight of the second weight unit is 0.94 kg.

As shown in FIG. 1, the axial inlet 12 of a garden blower 100 in the prior art is provided around the rearmost end of the garden blower 100, the operating handle 30 and/or the battery pack 60 is supported above the air duct portion 10, the length of the air duct portion 10 in the longitudinal direction is substantially equal to that of the garden blower 100 in the longitudinal direction, and the length of the garden blower 100 is generally between 800 mm and 900 mm. In another garden blower 100 in the prior art, the battery pack mounting portion is provided at the rear end of the air duct portion 10 (not shown), and the axial inlet 12 for the outside air to flow into the air duct portion 10 is formed at least in the side portion and the bottom portion of the air duct portion 10. The ratio of the length of the air duct portion 10 to the length of the garden blower 100 in the longitudinal direction is not less than 3/4. The above two garden blowers 100 cannot make the best use of the performance of the motor 40, and the air volume and air speed of the fan are also taken into account.

The inventors of the present application find by research that the dimensions of the air inlet shield 70 and the axial inlet 12 of the air duct portion 10 affect and constrain the dimension of the motor 40 and the dimension of the axial fan 50, and are closely related to the air speed and air volume of the garden blower 100, while the length dimension of the air duct portion 10 and the whole machine also affect whether the airflow can flow rapidly, which is finally fed back as the air speed and air volume of the garden blower 100. Therefore, when the air volume and the air speed are predetermined values, the maximum height of the air inlet shield 70 is H and the maximum width is W, and the length L of the garden blower 100 also affects whether the performance of the motor 40 can be maximized. In some embodiments, the maximum height of the air inlet shield 70 is H, and the maximum width of the air inlet shield 70 is W. The ratio of the maximum height H of the air inlet shield 70 to the length L of the whole machine is less than 0.15, the ratio of the maximum width W of the air inlet shield 70 to the length L of the whole machine is less than 0.15, the air volume provided by the garden blower is greater than or equal to 350 cfm, and less than or equal to 650 cfm, and the air speed provided is greater than or equal to 70 mph, and less than 185 mph. As such, the blowing performance and efficiency of the garden blower can reach better, and the role of the machine core of the high-speed plus small axial fan 50 is further maximized. Specifically, in some embodiments, the maximum height H of the air inlet shield 70 is greater than 80 mm and less than 130 mm. The maximum width W of the air inlet shield 70 is greater than 80 mm and less than 130 mm. The overall length L of the garden blower is between 850 mm and 1000 mm.

Exemplarily, the nominal output voltage of the battery pack 60 is less than or equal to 20 V, the capacity of the battery pack 60 is between 2 Ah and 9 Ah, the maximum rotational speed of the motor 40 is between 18000 rpm and 35000 rpm, the ratio of the maximum height of the air inlet shield 70 to the overall length of the garden blower is between 0.09 and 0.133, the ratio of the maximum width of the air inlet shield 70 to the overall length of the garden blower is between 0.09 and 0.133, and the maximum air speed of the garden blower is between 90 mph and 110 mph, and the maximum air volume of the garden blower is between 350 cfm and 500 cfm. In some other embodiments, the nominal output voltage of the battery pack 60 is greater than 20 V and less than or equal to 56 V, the capacity of the battery pack 60 is between 2 Ah and 9 Ah, the rotational speed of the motor 40 is between 20000 rpm and 38000 rpm, the ratio of the maximum height of the air inlet shield 70 to the overall length of the garden blower is between 0.11 and 0.16, and the ratio of the maximum width of the air inlet shield 70 to the overall length of the garden blower is between 0.11 and 0.16. The maximum air speed of the garden blower is between 110 mph and 160 mph, and the maximum air volume of the garden blower is between 420 cfm and 650 cfm. As such, the performance of the motor 40 can be used to the highest extent, and the air volume and air speed of the blower reach the optimal level.

In the above garden blower 100, the machine core consisting of the motor 40, the axial fan 50, and the guide structure 80 is provided in the air duct portion 10, and is separated from the operating handle 30 for holding by a certain distance in the longitudinal direction. In one aspect, the length of the air duct portion 10 becomes shorter. When the motor 40 drives the axial fan 50 to rotate at a high speed, the outside air can be quickly and sufficiently introduced into the air duct portion 10. The air inflows rapidly, so that the airflow loss is small, and enough airflow is driven by the motor 40 to rapidly flow, and the air pressure is high. The radial dimension of the air duct portion 10 can be reduced under the same air speed and air volume, thus optimizing the air speed and volume of the garden blower 100, and further reducing the weight of the garden blower 100. In another aspect, the garden blower 100 can be switched between the first operating mode with the high air speed and the second operating mode with high air volume with the cooperation of the primary blowing tube 11 and the auxiliary blowing tube 13, which can meet the performance requirements of different working conditions for the air speed and the air volume, and improve the performance experience of the garden blower 100. In yet another aspect, through the reasonable parameterized configuration of the motor 40, the axial fan 50, the air duct portion 10, the air volume and the air speed, the pattern of the high-rotational-speed motor 40 and the small axial fan 50 is formed, which can meet the performance requirements of the garden blower 100 while realizing the compactness and light weight.

The technical features of the above embodiments can be combined arbitrarily. In order to make the description simple, not all possible combinations of the technical features in the above embodiments are described. However, as long as the combination of these technical features is not contradictory, it should be considered as the scope of this specification.

The above embodiments only express several implementations of the present application, and their descriptions are more specific and detailed, but they cannot be understood as restrictions on the scope of the patent in the application. It should be pointed out that for those skilled in the art, without departing from the concept of the present application, several changes and improvements can also be made, which fall within the scope of protection of the present application. Therefore, the scope of protection of the patent in the present application shall be subject to the appended claims.

**Claims**

1. A garden blower (100), capable of gathering scattered foreign objects, wherein the garden blower (100) comprising:

   an air duct portion (10), comprising an axial inlet (12) communicating with the outside;
   a motor (40), providing a drive force to the garden blower (100);
   an axial fan (50), provided in the air duct portion (10);
   an air inlet shield (70), connected onto the axial inlet (12), the motor (40) driving the axial fan (50) to rotate about a fan axis and introduce outside air from the axial inlet (12) through the air inlet shield (70), the air inlet shield (70) being connected with the axial inlet (12), and comprising a plurality of shield holes (74) for airflow to flow through, and the sum of the ventilation area of the plurality of shield holes (74) defining a total effective ventilation area of the air inlet shield (70);
   an operating handle (30), used for a user to operate and hold;
   a battery pack mounting portion, detachably connected with a battery pack (60) for supplying power to the motor (40), the battery pack (60) mounting portion being provided close to the operating handle (30); and
   an extension rod (20), extending in a longitudinal direction, the operating handle (30) and the air duct portion (10) being separated from each other in the longitudinal direction by means of the extension rod (20), wherein
   a linear velocity of a blade edge (54) of the axial fan (50) being greater than 80 m/s, and the total effective ventilation area of the air inlet shield (70) being less than 12000 mm$^2$.

2. The garden blower (100) according to claim 1, wherein the air inlet shield (70) is configured to extend longitudinally in the fan axis of the axial fan (50);

   one end of the air inlet shield (70) is connected with the axial inlet (12), and the other end is supported on the extension rod (20); the axial fan (50) rotates to form a rotation surface; a projection area of an orthographic projection of the air inlet shield (70) falling, in the longitudinal direction, in a plane where the rotation surface is located is S1;
   a projection area of an orthographic projection of the end of the extension rod (20) connected with the air inlet shield (70) falling, in the longitudinal direction, in the plane where the rotation surface is located is S2,
   wherein

   $$6 \leq S1/S2 \leq 16.$$

3. The garden blower (100) according to claim 1, wherein the extension rod (20) is provided with a first end and a second end opposite to each other in the longitudinal direction, the extension rod (20) is connected with the air inlet shield (70) by the first end, and the extension rod (20) is connected with the operating handle (30) by the second end; and the axial fan (50) rotates to form a rotation surface; the orthographic projection of the first end falling, in the longitudinal extension direction of the extension rod (20), in the plane where the rotation surface is located is always located within an outer contour boundary of the rotation surface; and a cross-sectional area of the air inlet shield (70) is less than 13300 mm$^2$.

4. The garden blower (100) according to claim 3, wherein the air inlet shield (70) is provided with a plug-in portion (72) that extends for a preset distance in the extension direction of the extension rod (20), and the shield holes (74) are distributed circumferentially in the periphery of the plug-in portion (72);

and

the garden blower (100) further comprises a first connecting structure, the first end of the extension rod (20) being locked-connected with the plug-in portion (72) of the air inlet shield (70) through the first connecting structure,
wherein in the extension direction of the extension rod (20), an orthographic projection of the first connecting structure falling in the plane where the rotation surface is located does not basically coincide with orthographic projections of the shield holes (74) falling in the plane where the rotation surface is located.

5. The garden blower (100) according to claim 4, wherein the plug-in portion (72) is configured as a hollow plug-in pore passage, and the first connecting structure comprises:

a positioning hole (76), provided on the plug-in pore passage; and
a positioning piece (22), provided on the extension rod (20),
wherein the positioning piece (22) has a locking state of being clamped with the positioning hole (76) to restrict the extension rod (20) from coming off backwards from the plug-in portion (72).

6. The garden blower (100) according to claim 5, wherein in the locking state, an outer contour of the positioning piece (22) exceeds a contour of an inner wall surface of the positioning hole (76) outwards in a radial direction.

7. The garden blower (100) according to claim 5, wherein the positioning piece (22) further has a natural state in which the shape of the positioning piece (22) is kept inserted into the plug-in portion (72); in the natural state, the positioning piece (22) is in a preset position corresponding to the positioning hole (76);
and moreover, the positioning piece (22) is configured to change its shape and be in the locking state when subjected to an external acting force.

8. The garden blower (100) according to claim 5, wherein the first connecting structure further comprises a stop portion (78) provided on the plug-in portion (72); the stop portion (78) can be abutted with the first end of the extension rod (20) to stop the extension rod (20) from moving forward from the plug-in portion (72).

9. The garden blower (100) according to claim 1, wherein the air duct portion (10) comprises a primary blowing tube (11) and a auxiliary blowing tube (13) communicating with the primary blowing tube (11);

the primary blowing tube (11) is provided with the axial inlet (12) and a primary blow hole (14) opposite to the axial inlet (12); the auxiliary blowing tube (13) is provided with a auxiliary inlet (132) communicating with the primary blow hole (14); in a direction perpendicular to the longitudinal direction, the cross-sectional area of the auxiliary inlet (132) is greater than that of the primary blow hole (14); and there is a gap for external airflow to enter the auxiliary blowing tube (13) between the primary blow hole (14) and the auxiliary inlet (132).

10. The garden blower (100) according to claim 9, wherein the garden blower (100) can be switched between a first operating mode in which air is exhausted at a relatively high air speed and a relatively low air volume and a second operating mode in which air is exhausted at a relatively low air speed and a relatively high air volume, through the auxiliary blowing tube (13);
the auxiliary blowing tube (13) is movably connected with the primary blowing tube (11), and the auxiliary blowing tube (13) can be retracted backward or stretch out forward in the longitudinal direction, so that the garden blower (100) can be switched between the first operating mode and the second operating mode.

11. The garden blower (100) according to claim 10, wherein a nominal output voltage of the battery pack (60) is less than or equal to 20 V, a capacity of the battery pack (60) is between 2 Ah and 9 Ah, a maximum rotational speed of the motor (40) is between 18000 rpm and 35000 rpm, a weight of the garden blower (100) without the battery pack (60) connected is not more than 1.5 kg, a maximum air speed of the garden blower (100) in the first operating mode is between 90 mph and 110 mph, and a maximum air volume of the garden blower (100) in the second operating mode is between 350 cfm and 500 cfm; alternatively
the nominal output voltage of the battery pack (60) is greater than 20 V and less than 56 V, the capacity of the battery pack (60) is between 2 Ah and 9 Ah, the maximum rotational speed of the motor (40) is between 20000 rpm and 38000 rpm, the weight of the garden blower (100) without the battery pack (60) connected is not more than 1.8 kg, the maximum air speed of the garden blower (100) in the first operating mode is between 110 mph and 180 mph, and the maximum air volume of the garden blower (100) in the second operating mode is between 420 cfm and 650 cfm.

12. The garden blower (100) according to claim 11, wherein the length of the air duct portion (10) is not more than 600 mm.

**13.** The garden blower (100) according to claim 10, wherein a nominal output voltage of the battery pack (60) is less than or equal to 20 V, a capacity of the battery pack (60) is between 2 Ah and 9 Ah, a maximum rotational speed of the motor (40) is between 18000 rpm and 35000 rpm, a diameter of the motor (40) is less than or equal to 40 mm, a maximum effective ventilation area of a cross section of the axial inlet (12) perpendicular to the fan axis is less than 9000 $mm^2$, and an outer diameter of the axial fan (50) is greater than or equal to 50 mm, less than or equal to 67 mm; alternatively
the nominal output voltage of the battery pack (60) is greater than 20 V and less than 56 V, the capacity of the battery pack (60) is between 2 Ah and 9 Ah, the maximum rotational speed of the motor (40) is between 20000 rpm and 38000 rpm, the diameter of the motor (40) is less than or equal to 45 mm, the maximum effective ventilation area of the cross section of the axial inlet (12) perpendicular to the fan axis is less than 13000 $mm^2$, and the outer diameter of the axial fan (50) is greater than or equal to 50 mm, less than or equal to 67 mm.

**14.** The garden blower (100) according to claim 1, wherein an interstice is provided between an outer edge of a blade (54) of the axial fan (50) and an inner wall of the air duct portion (10); and
the dimension of the interstice in the radial direction is less than 1 mm.

**15.** The garden blower (100) according to claim 1, wherein a linear distance between the highest point of the operating handle (30) and the lowest point of the extension rod (20) is less than 140 mm and greater than 40 mm.

FIG. 1

FIG. 2

FIG. 3

FIG. 4

FIG. 5

FIG. 6

FIG. 7

FIG. 8

FIG. 9

FIG. 10

FIG. 11

FIG. 12

| **INTERNATIONAL SEARCH REPORT** | International application No. |
|---|---|
| | **PCT/CN2021/121354** |

**A. CLASSIFICATION OF SUBJECT MATTER**

E01H 1/08(2006.01)i

According to International Patent Classification (IPC) or to both national classification and IPC

**B. FIELDS SEARCHED**

Minimum documentation searched (classification system followed by classification symbols)

E01H

Documentation searched other than minimum documentation to the extent that such documents are included in the fields searched

F04D,E01H,A47L,B08B,A01G

Electronic data base consulted during the international search (name of data base and, where practicable, search terms used)

CNPAT, CNKI, WPI, EPODOC, 吹风机, 轴向, 纵向, 进风, 电池, 延长, 延伸, 分开, 拉开, 隔开, blower, longitudinal, air , battery, extension , apart

**C. DOCUMENTS CONSIDERED TO BE RELEVANT**

| Category* | Citation of document, with indication, where appropriate, of the relevant passages | Relevant to claim No. |
|---|---|---|
| PX | CN 111749912 A (POSITEC POWER TOOLS (SUZHOU) CO., LTD.) 09 October 2020 (2020-10-09) description paragraphs [0006]-[00169], figures 1-19 | 1-15 |
| PX | CN 111749175 A (POSITEC POWER TOOLS (SUZHOU) CO., LTD.) 09 October 2020 (2020-10-09) description paragraphs [0044]-[0073], figures 1-5 | 1-15 |
| PX | CN 212717246 U (POSITEC POWER TOOLS (SUZHOU) CO., LTD.) 16 March 2021 (2021-03-16) description paragraphs [0006]-[00167], figures 1-19 | 1-15 |
| PX | CN 212129012 U (POSITEC POWER TOOLS (SUZHOU) CO., LTD.) 11 December 2020 (2020-12-11) description paragraphs [0029]-[0083], figures 1-4 | 1-15 |
| A | CN 104248394 A (POSITEC POWER TOOLS (SUZHOU) CO., LTD.) 31 December 2014 (2014-12-31) entire document | 1-15 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **06 December 2021** | **30 December 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| | International application No. |
|---|---|
| | **PCT/CN2021/121354** |

**C. DOCUMENTS CONSIDERED TO BE RELEVANT**

| Category* | Citation of document, with indication, where appropriate, of the relevant passages | Relevant to claim No. |
|---|---|---|
| A | CN 205046514 U (YONGKANG WEILI GARDEN MACHINERY CO., LTD.) 24 February 2016 (2016-02-24)<br>entire document | 1-15 |
| A | DE 202017106572 U1 (NANJING CHERVON INDUSTRY CO., LTD.) 31 January 2018 (2018-01-31)<br>entire document | 1-15 |

Form PCT/ISA/210 (second sheet) (January 2015)

INTERNATIONAL SEARCH REPORT
Information on patent family members

International application No.

**PCT/CN2021/121354**

| Patent document cited in search report | | | Publication date (day/month/year) | Patent family member(s) | | | Publication date (day/month/year) |
|---|---|---|---|---|---|---|---|
| CN | 111749912 | A | 09 October 2020 | CN | 111749173 | A | 09 October 2020 |
| | | | | CN | 111749176 | A | 09 October 2020 |
| | | | | CN | 212294493 | U | 05 January 2021 |
| | | | | CN | 212129012 | U | 11 December 2020 |
| | | | | CN | 111749913 | A | 09 October 2020 |
| | | | | CN | 111749175 | A | 09 October 2020 |
| | | | | CN | 212294492 | U | 05 January 2021 |
| | | | | CN | 111749174 | A | 09 October 2020 |
| CN | 111749175 | A | 09 October 2020 | CN | 111749173 | A | 09 October 2020 |
| | | | | CN | 111749176 | A | 09 October 2020 |
| | | | | CN | 111749912 | A | 09 October 2020 |
| | | | | CN | 212294493 | U | 05 January 2021 |
| | | | | CN | 212129012 | U | 11 December 2020 |
| | | | | CN | 111749913 | A | 09 October 2020 |
| | | | | CN | 212294492 | U | 05 January 2021 |
| | | | | CN | 111749174 | A | 09 October 2020 |
| CN | 212717246 | U | 16 March 2021 | CN | 212129013 | U | 11 December 2020 |
| | | | | WO | 2020192753 | A1 | 01 October 2020 |
| CN | 212129012 | U | 11 December 2020 | CN | 111749173 | A | 09 October 2020 |
| | | | | CN | 111749176 | A | 09 October 2020 |
| | | | | CN | 111749912 | A | 09 October 2020 |
| | | | | CN | 212294493 | U | 05 January 2021 |
| | | | | CN | 111749913 | A | 09 October 2020 |
| | | | | CN | 111749175 | A | 09 October 2020 |
| | | | | CN | 212294492 | U | 05 January 2021 |
| | | | | CN | 111749174 | A | 09 October 2020 |
| CN | 104248394 | A | 31 December 2014 | None | | | |
| CN | 205046514 | U | 24 February 2016 | None | | | |
| DE | 202017106572 | U1 | 31 January 2018 | None | | | |

Form PCT/ISA/210 (patent family annex) (January 2015)

**REFERENCES CITED IN THE DESCRIPTION**

**Patent documents cited in the description**

- CN 202011053850X
- CN 202011425445